# EUROPÄISCHE PATENTSCHRIFT

(11) **EP 3 403 102 B1**
(45) Veröffentlichungstag und Bekanntmachung des Hinweises auf die Patenterteilung: **27.11.2019**
(21) Anmeldenummer: 16828725.8
(22) Anmeldetag: 20.12.2016
(51) Int. Cl.: G01P 15/00, G01P 15/04, G01P 15/03

(54) **STOSSSENSOR ZUM NACHWEIS EINES STOSSES ODER EINER SONSTIGEN BESCHLEUNIGUNG**
IMPACT SENSOR FOR IDENTIFYING AN IMPACT OR ANY OTHER ACCELERATION
CAPTEUR DE CHOC POUR LA DÉTECTION D'UN CHOC OU D'UNE AUTRE ACCÉLÉRATION

(30) Priorität: 14.01.2016 DE 102016100573
(43) Veröffentlichungstag der Anmeldung: 21.11.2018
(73) Patentinhaber: Schreiner Group GmbH & Co. KG, 85764 Oberschleissheim (DE)
(72) Erfinder: ZIMMERMANN, Peter, 81829 München (DE); GÖPPERT, Pierre, 80939 München (DE); KUGLER, Kurt, 85757 Karlsfeld (DE); ROGGE, Jan, 12347 Berlin (DE); SAMUEL, Thomas, 80933 München (DE); BAUR, Sebastian, 85368 Moosburg a. d. Isar (DE)
(74) Vertreter: Epping - Hermann - Fischer
(86) Internationale Anmeldenummer: PCT/EP2016/081980
(87) Internationale Veröffentlichungsnummer: WO 2017/121586

(56) Entgegenhaltungen:
- WO-A2-2012/170252
- US-A- 4 125 085
- US-A- 4 698 623
- US-A1- 2012 312 224

## Beschreibung

Die Erfindung betrifft einen Stoßsensor zum Nachweis eines Stoßes oder einer sonstigen Beschleunigung. Bei der Handhabung, dem Gebrauch und insbesondere dem Transport bzw. Versand von Gegenständen oder größeren Anlagen können in Folge unsachgemäßer Handhabung Stöße und somit Beschädigungen auftreten, zu deren Nachweis entsprechende Stoßsensoren verwendbar sind. Ein Stoß oder eine sonstige Beschleunigung einer Stärke, die oberhalb der durch einen Stoßsensor detektierbaren Mindeststärke liegt, wird durch den Sensor erfasst und dauerhaft angezeigt. Dadurch kann z.B. der Empfänger eines Pakets, einer Verpackung oder eines sonstigen Gegenstands anhand des Sensors feststellen, ob das Risiko einer Beschädigung besteht und der Gegenstand genauer untersucht werden muss.

Manche herkömmliche Stoßsensoren enthalten einen Behälter mit Flüssigkeit, die erst dann, wenn der Gegenstand um einen bestimmten Mindestwinkel geneigt oder einer bestimmten Mindestbeschleunigung ausgesetzt wird, sich innerhalb des Behälters bewegt und so eine Anzeige über den erfolgten Kipp-, Stoß- oder Beschleunigungsvorgang herbeiführt. Nachteilig bei herkömmlichen Stoßsensoren ist allerdings der in der Regel sehr komplizierte räumliche Aufbau und der entsprechend hohe Arbeits- und Kostenaufwand bei ihrer Herstellung.

US 4,125,085 A zeigt einen Stoßsensor mit einem würfelförmigen Behälter, in den drei sich rechtwinklig zueinander kreuzenden zylindrischen Aussparungen eingearbeitet sind. Ein flüssiger oder anderweitiger Inhalt, der die Kreuzung der drei Aussparungen füllt, verlagert sich bei Stößen oberhalb einer bestimmten Mindeststärke in eine der Aussparungen hinein.

WO 2012/170252 A2 zeigt einen unidirektionalen Stoßsensor mit einer länglichen Röhre, die bereichsweise mit zwei verschiedenen Flüssigkeiten unterschiedlicher Viskosität und/oder Farbe gefüllt ist. Bei Durchmischung beider Flüssigkeiten aufgrund eines Stoßes ist eine Farbänderung beobachtbar. Der Stoßsensor ist nur zum Nachweis von Stößen entlang einer einzigen Vorzugsrichtung geeignet und muss hierzu in der geeigneten Orientierung gelagert oder montiert werden.

US 4,698,623 A zeigt einen Stoßsensor mit einer zerbrechlichen, beispielsweise gläsernen Röhre, die in der Mitte eine Sollbruchstelle aufweist und mit einer leitfähigen Flüssigkeit gefüllt ist. Bei einem starken Stoß bricht die Röhre in der Mitte auseinander, und die Flüssigkeit tritt aus und erzeugt einen Kurzschluss.

Aus US 2012/0312224 A1 ist ein Stoßsensor gemäß dem Oberbegriff des Anspruchs 1 bekannt. Der Stoßsensor besitzt zwei massive, dreidimensional geformte Formteile. In das untere Formteil ist eine Kavität zur Aufnahme einer Flüssigkeit eingearbeitet. Das zweite Formteil dient zu Überdecken des ersten Formteils. Bei Stößen oberhalb einer bestimmten Mindeststärke kann ein Teil der Flüssigkeit die Kavität verlassen und dabei erstmals mit dem zweiten Formteil in Kontakt kommen.

US 2014/0360269 beschreibt einen Stoßsensor, der eine Kavität zwischen zwei Folienflächen aufweist. Der Stoßsensor besitzt weiterhin eine Barriere, die senkrecht zwischen den Folien angeordnet ist, um eine Flüssigkeit in einem Teilvolumen der Kavität einzuschließen, die bei entsprechenden Stößen oder Beschleunigungen diese Barriere überwindet, um in ein benachbartes Teilvolumen zu fließen. Diese Barriere kann auch als Lücke in der oberen und unteren Abgrenzung realisiert sein.

Der letztgenannte Soßsensor sowie die übrigen oben genannten Stoßsensoren sind alle mehr oder weniger relativ komplex aufgebaut und erfordern daher einen gewissen Arbeits- und Kostenaufwand zu ihrer Herstellung.

Es ist die Aufgabe der vorliegenden Erfindung, einen Stoßsensor zum Nachweis eines Stoßes oder einer sonstigen Beschleunigung bereitzustellen, der weniger komplex aufgebaut ist und einfacher und/oder preiswerter herstellbar ist.

Diese Aufgabe wird durch den Stoßsensor gemäß Anspruch 1 gelöst.

Es wird ein Stoßsensor vorgeschlagen, der im Wesentlichen als Schichtverbund herstellbar ist, insbesondere als folienbasierter, d.h. unter Verwendung von Folien und insbesondere Kunststofffolien gebildeter Schichtverbund. Solch ein Schichtverbund ist bei der Etikettenherstellung und in anderen Anwendungsgebieten einfach, kostengünstig und in großen Mengen mit großem Durchsatz herstellbar. Der in dieser Anmeldung beschriebene Stoßsensor kommt ohne aufwändige, dreidimensional strukturierte Einzelteile aus, wie sie ansonsten bei herkömmlichen Stoßsensoren verbaut sind; insbesondere ohne aufwändige Spritzgussteile oder komplex geformte Einzelteile aus anderweitigen Guss- oder Pressformen. Der hier beschriebene Stoßsensor ist als preiswertes Verbrauchsprodukt auf jeden beliebigen Gegenstand, insbesondere auf Postsendungen, Verpackungen oder auch größere Geräte oder Anlagen aufklebbar, und er ermöglicht bereits vor dem Öffnen oder Inbetriebnehmen des sensorisch überwachten Gegenstandes eine Erstkontrolle, ob der Inhalt bzw. der Gegenstand stärkeren Beschleunigungen ausgesetzt wurde. Als eine von vielen Anwendungsmöglichkeiten ist beispielsweise denkbar, Behälter für chemische Substanzen, Flüssigkeiten oder sonstige Darreichungsformen, beispielsweise Medikamentenbehälter mit solch einem Stoßsensor zu versehen; etwa zur Qualitätskontrolle von Medikamenten, die beispielsweise Eiweißmoleküle mit einem vorgegebenen räumlichen Aufbau oder einer vorgegebenen räumlichen Verknäuelung besitzen, die im Falle starker Stöße zerfallen könnte. Ungeachtet dieses Anwendungsbeispiels sind die nachfolgenden Ausführungsformen jedoch auf jede denkbare Anwendungsmöglichkeit von Stoß- oder Beschleunigungssensoren anwendbar.

Einige exemplarische Ausführungsbeispiele werden nachstehend mit Bezug auf die Figuren beschrieben. Es zeigen:
- Die Figuren 1A bis 1D: einige Ausführungsbeispiele anmeldungsgemäßer Stoßsensoren mit einem Schichtverbund in Querschnittsansicht,
- die Figuren 2A bis 2C: schematische Darstellungen eines Stoßsensors mit mehreren umliegenden Kammern mit verschiedenen Positionen eines Flüssigkeitstropfens vor einem Stoß, während des Stoßes und nach dem Stoß,
- Figur 3: einen Stoßsensor, der beabstandet zu einer Haltestruktur ein Material zum Nachweis von über die Haltestruktur übergetretener Flüssigkeit aufweist,
- die Figuren 4A und 4B: in Draufsicht und in Querschnittsansicht ein Ausführungsbeispiel eines Stoßsensors, dessen Kavität eine Mehrzahl seitlicher Ausbuchtungen mit separaten Stücken oder Bereichen eines Materials zum richtungsabhängigen Nachweis ausgetretener Flüssigkeit aufweist,
- die Figuren 5A und 5B: ein Ausführungsbeispiel eines Stoßsensors mit einer größeren Anzahl von Halte- und/oder Führungsstrukturen als im Ausführungsbeispiel der Figuren 4A und 4B,
- Figur 6: ein Ausführungsbeispiel eines Stoßsensors mit einer größeren Anzahl von seitlichen Ausbuchtungen und Materialstücken,
- Figur 7: ein Ausführungsbeispiel eines Stoßsensors zum selektiven Nachweis von Stößen entlang einer einzelnen, vorbestimmten Vorzugsrichtung,
- Figur 8: eine Weiterbildung gegenüber Figur 7, wobei der Stoßsensor eine Mehrzahl von Kavitäten aufweist, in denen Stöße unterschiedlicher Mindeststärke mit jeweils unterschiedlich hoher Nachweisempfindlichkeit nachweisbar sind,
- Figur 9: ein Ausführungsbeispiel eines Stoßsensors für eine elektrische Messung eines Stoßes,
- Figur 10: eine exemplarische Elektrodenanordnung für eine elektrische Messung eines Stoßes, die für den Stoßsensor aus Figur 9 geeignet ist, in schematischer Draufsicht,
- Figur 11: ein Ausführungsbeispiel eines Stoßsensors, der zu einem frei wählbaren Zeitpunkt in einen für Stöße sensitiven Zustand versetzbar ist, in einem ursprünglichen Ausgangszustand, in dem der Stoßsensor noch nicht für Stöße sensitiv ist, und
- Figur 12: den Stoßsensor aus Figur 11 in einem sensitiven, d.h. zum Nachweis eines Stoßes vorbereiteten Zustand, in dem der Stoßsensor bereits aktiviert ist, aber noch keinen Stoß oberhalb der nachweisbaren Mindeststärke erlitten hat.

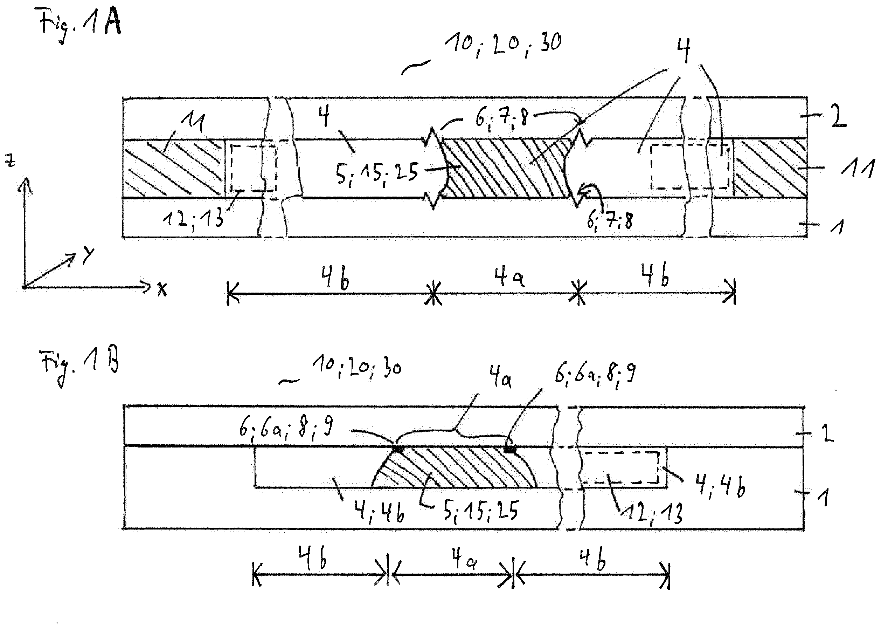

Die Figuren 1A bis 1D zeigen in Querschnittsansicht einige Ausführungsbeispiele von Stoßsensoren. Gemäß diesen und den nachfolgenden Ausführungsbeispielen ist der Stoßsensor 10 als Schichtverbund 20 ausgebildet, wobei der Schichtverbund 20 eine Flüssigkeit 5 in Form eines Tropfens 15 oder eines sonstigen Flüssigkeitsvorrats 25 enthält, der innerhalb des Schichtverbunds 20 angeordnet ist. Trotz des einfachen Aufbaus des Schichtverbunds 20 lassen sich bei den hier vorgeschlagenen Ausführungsformen Stöße oder sonstige Beschleunigungen bzw. Abbremsvorgänge, die eine vorbestimmte Mindeststärke überschreiten, durch eine Veränderung der Position, Ausdehnung und/oder Verteilung der Flüssigkeit im Inneren des Schichtverbunds 20 nachweisen und dauerhaft anzeigen. Der Schichtverbund 20 des Stoßsensors 10 umfasst zumindest eine erste Folie 1, eine zweite Folie 2 und zumindest eine zwischen diesen beiden Folien angeordnete Kavität 4, Aussparung oder sonstige Ausnehmung. Nachfolgend wird der Kürze halber nur noch von einer Kavität gesprochen. Die Kavität 4 erstreckt sich über einen Teil der Grundfläche des Schichtverbunds 20 und bildet ein Volumen, das teilweise mit der Flüssigkeit 5, zu einem überwiegenden Teil jedoch mit Luft, einem anderen Gas oder einer Gasmischung gefüllt ist. Alternativ kann das Restvolumen in der Kavität 4, soweit es nicht mit der zu Nachweiszwecken eingesetzten Flüssigkeit 5 gefüllt ist, auch mit einer anderen, weiteren Flüssigkeit gefüllt sein, die sich mit der eigentlichen Nachweisflüssigkeit 5 nicht ohne Weiteres vermischt. In beiden Fällen besitzt die Flüssigkeit 5 vorzugsweise eine höhere oder jedenfalls unterschiedliche Oberflächenspannung, Benetzungsfähigkeit, Adhäsionskraft, Dichte und/oder Viskosität als das sie umgebende Medium innerhalb der Kavität 4. Vorzugsweise ist die Kavität 4 außerhalb der Flüssigkeit 5 jedoch mit Luft oder einem sonstigen gasförmigen, d.h. deutlich leichteren und weniger dichten Medium gefüllt.

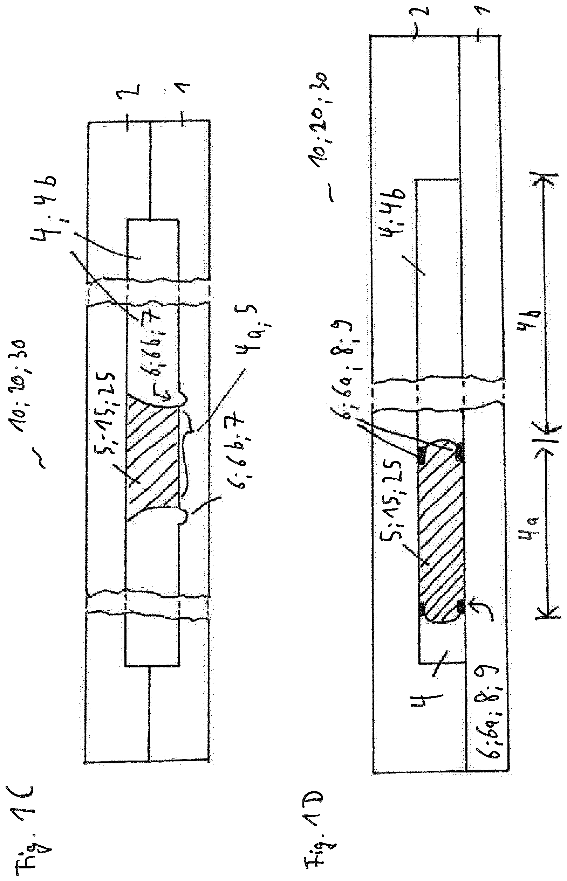

Gemäß Figur 1A befindet sich die Kavität 4 zwischen zwei Folien 1, 2, die durch eine Zwischenschicht 11 voneinander beabstandet sind und in einem vorgegebenen Abstand voneinander gehalten werden, der vorzugsweise über die Grundfläche des Schichtverbunds 20 einheitlich groß ist und der Dicke bzw. Höhe der Kavität 4 entspricht. Die beiden Folien 1, 2 sind beispielsweise Kunststofffolien geeigneter Schichtdicke, beispielsweise zwischen 0,1 mm und 1,0 mm. Alternativ können auch andere Materialien eingesetzt werden, wie weiter unten erläutert wird. Die Kavität 4 in Figur 1 bildet ein Volumen, welches bestimmungsgemäß während des Gebrauchs, d. h. in dem für Stöße und mechanische Beschleunigungen sensitiven Zustand des Sensors, zu einem ersten Teil mit der Flüssigkeit 5 gefüllt und zu einem zweiten Teil frei oder vorerst noch frei von Flüssigkeit ist. Derjenige Teil des Volumens bzw. der Kavität 4, der im gebrauchsfertigen, d.h. sensitiven Zustand des Stoßsensors 10 mit der Flüssigkeit 5 gefüllt ist, wird nachstehend als das erste Teilvolumen 4a der Kavität 4 bezeichnet, und das restliche, die Flüssigkeit in der Kavität umgebende oder jedenfalls mit ihr nicht ausgefüllte Volumen wird nachstehend als zweites Teilvolumen 4b der Kavität 4 bezeichnet. Das zweite Teilvolumen 4b dient zum Auffangen zumindest eines Teils der Flüssigkeit 5 im Falle der Einwirkung eines Stoßes oder einer sonstigen Beschleunigung ausreichender Stärke, wenn dadurch die Flüssigkeit 5 aus dem ersten Teilvolumen 4a in das zweite Teilvolumen 4b hinein befördert wird.

Gemäß der vorliegenden Anmeldung ist mindestens eine Haltestruktur 6 vorgesehen. Die Menge von Flüssigkeit 5 wird bei der Herstellung oder spätestens bei der Aktivierung, d.h. beim Sensitivmachen des Stoßsensors im Bereich der Haltestruktur 6 positioniert, und zwar in einem Teilvolumen 4a der Kavität 4, welches in seitlicher Richtung durch die Position der mindestens einen Haltestruktur 6 begrenzt wird. Das ist dadurch realisierbar, dass die mindestens eine Haltestruktur 6 eine Erhöhung, Vertiefung oder sonstige Unebenheit auf der an die Kavität angrenzenden Hauptfläche der ersten und/oder zweiten Folie 1, 2 ist, die nicht ohne Weiteres durch den Flüssigkeitstropfen überquert bzw. überwunden werden kann.

Die mindestens eine Haltestruktur 6 ist somit ein Bereich der ersten und/oder zweiten Folie 1; 2, nämlich ein Bereich, der als lokale Erhebung, Vertiefung oder als sonstige lokale Unebenheit der Folienfläche ausgebildet ist. Die lokale Erhebung, Vertiefung oder sonstige Unebenheit bildet eine überwindbare Barriere für die Benetzung und/oder Berührung der Folienfläche der ersten und/oder zweiten Folie durch die Flüssigkeit, wodurch das mit der Flüssigkeit auszufüllende erste Teilvolumen 4a in seitlicher Richtung umgrenzt wird.

Zur Realisierung dieser als Barriereelement dienenden Haltestruktur ist weder ein zusätzliches Formteil noch ein sonstiges Inlay zwischen den Folien erforderlich; vielmehr wird das Halteelement oder werden die Halteelemente durch die beiden Folien selbst gebildet, d.h. die Halteelemente sind Folienbereiche der Folien selbst; d.h. Folienbereiche einer der Folien oder beider Folien 1, 2. Es ist somit nicht erforderlich, die Kavität zwischen beiden Folien durch das Einbringen von Zwischenwänden, Zwischenstegen oder sonstigen Trennstrukturen künstlich in zwei Teilvolumina bzw. Teilkavitäten zu unterteilen. Insbesondere ist der Abstand und/oder der Zwischenraum zwischen beiden Folien 1, 2 im Bereich der mindestens einen Haltestruktur 6 frei von weiterem Material; insbesondere frei von wandförmigen Strukturen und/oder festen Strukturen. Somit wird ohne Verwendung gegenständlicher Trennstrukturen eine Aufteilung des Kavitätsvolumens 4 in das erste Teilvolumen 4a und das zweite Teilvolumen 4b erreicht.

Das Volumen der Kavität ist somit ein zusammenhängendes, ununterbrochenes Volumen, welches das (bestimmungsgemäß mit der Flüssigkeit auszufüllende) erste Teilvolumen und das (bestimmungsgemäß zunächst mit Luft gefüllte oder zumindest zunächst frei von Flüssigkeit gehaltene) zweite Teilvolumen umfasst. Beide Teilvolumina der Kavität grenzen somit unmittelbar aneinander an. Insbesondere im Bereich der mindestens einen Haltestruktur 6 ist das Volumen der Kavität zusammenhängend bzw. durchgehend, d.h. frei von Unterbrechungen. Lediglich die Schichtdicke einer oder beider Folien und/oder die Höhenposition ihrer Folienfläche ist aufgrund der als Flüssigkeitsbarriere dienenden Erhebung 6a, Vertiefung 6b oder sonstigen Unebenheit 8 lokal verändert. Doch auch unmittelbar über bzw. unter der oder den Haltestrukturen, d.h. direkt über und/oder unter den Erhebungenen, Vertiefungen oder sonstigen Unebenheiten sind die beiden Folien 1, 2 frei von Wänden, Abstandshaltern, Verbindungselementen oder sonstigen Trennstrukturen.

Die laterale Erstreckung der Kavität bzw. ihres Voluments ist daher so gestaltbar, dass sich die Flüssigkeit grundsätzlich beliebig in der Kavität verteilen kann und nur durch die mindestens eine Haltestruktur 6 von einem Eindringen in das zweite Teilvolumen 4b gehindert wird, jedenfalls solange kein Stoß und keine sonstige Beschleunigung oberhalb der vorbestimmten Mindeststärke auftritt. Unterhalb der vorbestimmten Mindeststärke wirkt die als Erhebung 6a, Vertiefung 6b oder sonstige Unebenheit 8 ausgebildete Haltestruktur 6 als überwindbare Barriere für die Benetzung und/oder Berührung der ersten und/oder zweiten Folie 1; 2 durch die Flüssigkeit 5.

In Folge der Oberflächenspannung, Viskosität oder sonstiger Eigenschaften der Flüssigkeit 5 oder ihres Verhaltens an der Grenzfläche zur in der Kavität freiliegenden Hauptfläche bzw. Folienfläche der ersten und/oder zweiten Folie 1, 2 wird durch die mindestens eine Haltestruktur 6 ein Umschließen oder jedenfalls Festhalten der Flüssigkeitsmenge im ersten Teilvolumen 4a erreicht.

Das erste Teilvolumen 4a ist insbesondere derjenige Volumenanteil der Kavität, der in der Projektion auf ihre Grundfläche von der mindestens einen Haltestruktur 6 umgeben wird und somit in lateraler Richtung innerhalb der Haltestruktur 6 angeordnet ist. Die Erhebung, Vertiefung oder sonstige Unebenheit umgrenzt somit ein Flächenstück der Folienfläche beispielsweise der unteren Folie, welches dem ersten Teilvolumen 4a bzw. seiner Grund- oder Bodenfläche entspricht.

Vorzugsweise ist an beiden Folie jeweils ein Halteelement ausgebildet. Das mindestens eine Halteelement 6 besteht dann aus einem ersten Halteelement der ersten Folie und einem zweiten Halteelement der zweiten Folie, d.h. aus je einem (beispielsweise kreis- oder ringförmigen) Bereich der Folienfläche der ersten sowie zweiten Folie.

Vorzugsweise ist die Haltestruktur 6 an der ersten und/oder zweiten Folie 1, 2 linienförmig und in sich geschlossen ausgebildet oder weist jedenfalls keine Unterbrechungen auf, die beim Kontakt mit der Flüssigkeit von dieser nicht überbrückt werden könnten.

Durch die mindestens eine Haltestruktur 6 wird somit vorgegeben, wo, d.h. in welchem Teilvolumen 4a die Flüssigkeit nach dem Einbringen ihre Position einnimmt und/oder beibehält, jedenfalls solange keine Stöße oder Beschleunigungen oberhalb der Nachweis- bzw. Empfindlichkeitsgrenze des Stoßsensors auftreten.

Die mindestens eine Haltestruktur 6 ist so ausgebildet, dass sie ein Austreten der Flüssigkeit 5 oder eines Teils davon erst im Falle eines Stoßes oder einer sonstigen Beschleunigung oberhalb einer vorbestimmten Mindeststärke ermöglicht, ansonsten aber eine Barriere darstellt, die - gegebenenfalls unter Ausnutzung der Oberflächenspannung, Benetzungsfähigkeit, Adhäsionskraft, Dichte und/oder Viskosität der Flüssigkeit - deren Austritt aus dem ersten Teilvolumen 4a in das zweite Teilvolumen 4b hinein verhindert. In Figur 1A ist in den an die Kavität 4 angrenzenden Oberflächen der ersten und der zweiten Folie 1, 2 jeweils ein solches Halteelement, d.h. eine solche Haltestruktur 6 dargestellt.

Die mindestens eine Haltestruktur 6 stellt beispielsweise eine lokale Unebenheit 8 dar, die bei der Herstellung und/oder Bearbeitung der jeweiligen Folie in ihre Oberfläche eingebracht wurde. Eine Haltestruktur 6 kann beispielsweise eine im Vergleich zur ansonsten planen Folienfläche abweichende Unebenheit mit einem linienförmigen Verlauf sein. Die Linie kann z.B. eine Ritzlinie, Stanzlinie, Prägelinie oder Laserlinie sein oder durch eine sonstige, z.B. mechanische Einwirkung auf die Folie hergestellt sein. In Figur 1A ist der Linienquerschnitt 7 beispielsweise für eine Ritzlinie schematich dargestellt. Die Haltestruktur 6 ist vorzugsweise kreis- oder ringförmig ausgebildet und umgrenzt bzw. umläuft dadurch einen inneren Flächenabschnitt der Folienfläche der Folien 1, 2, in welchem die Flüssigkeit bei der Herstellung oder spätestens bei der Aktivierung, d.h. Sensibilisierung oder Sensitivmachung des Stoßsensors, positioniert wird und diese Flächenabschnitte dauerhaft berührt.

In dem Beispiel der Figur 1A ist die Flüssigkeit 5 in Form eines durch die oberen und unteren Haltestrukturen 6 in seiner Position fixierten Flüssigkeitsvorrats 25, insbesondere als Flüssigkeitstropfen 15 vorgesehen, der aufgrund seiner Oberflächenspannung von allein, d.h. ohne starke äußere Beschleunigungen, nicht in der Lage ist, die Folien 1, 2 auch in den Bereichen seitlich außerhalb der Haltestrukturen 6 zu benetzen und/oder somit aus dem inneren, umschlossenen ersten Teilvolumen 4a seitlich herauszutreten. Erst bei Beschleunigungen bzw. Stößen, deren Komponente in der x-y-Ebene, d.h. in Richtung parallel zur Grundebene des Schichtverbunds 20, eine vorbestimmte Mindeststärke überschreiten, überwindet die Flüssigkeit 5 - unter dem Einfluss der äußeren Beschleunigung des Schichtverbunds - die durch die Haltestrukturen 6 gebildete Barriere und gelangt so in das benachbarte, zweite Teilvolumen 4b der Kavität 4, welches sich seitlich außerhalb der Haltestrukturen 6 herum erstreckt.

Da nach einem heftigen Stoß die Haltestrukturen 6 auch weiterhin eine Barriere für die seitliche Fortbewegung der Flüssigkeit oder einer in das zweite Teilvolumen 4b ausgetretenen Flüssigkeitsmenge darstellen, gelangt dieser Teil der Flüssigkeit nicht mehr in das erste Teilvolumen 4a zurück. Im einfachsten Fall ist der erfolgte Stoß durch die Flüssigkeitsmenge erkennbar, die durch eine transparente erste und/oder zweite Folie 1, 2 hindurch von außen mit bloßem Auge im Bereich des umgebenden zweiten Teilvolumens 4b sichtbar ist.

Da der Einfluss der Oberflächenspannung und/oder Adhäsionskraft der Flüssigkeit auf die Position des Flüssigkeitstropfens stärker ist als der Einfluss des Eigengewichts der Flüssigkeit, kann der als Schichtverbund 20 ausgebildete Stoßsensor 10 in jeder beliebigen Orientierung eingesetzt und zur Stoßdetektion verwendet werden, beispielsweise wie dargestellt in horizontaler Ausrichtung parallel zur Erdoberfläche zum Nachweis horizontaler Stöße, aber auch in beliebigen räumlich verkippten Positionen. Beispielsweise könnte der Stoßsensor um 90° gedreht, d.h. hochkant an einem Gerät oder Behälter befestigt werden, um bei hartem Aufsetzen auf den Boden ein Überschreiten einer zulässigen Maximalbeschleunigung dauerhaft anzuzeigen.

Der Stoßsensor 10 ist insbesondere als Etikett 30 ausbildbar und kann weitere, in Figur 1A nicht dargestellte Schichten aufweisen, etwa solche zum Aufkleben auf eine Unterlage oder Deckschichten zur Beschriftung des die Kavität umschließenden Folienverbunds mit den Folien 1, 2 und ggfs. mindestens einer der die Kavität 4 seitlich umgebenden Zwischenschicht 11. Die in Figur 1A und in einigen der nachfolgenden Figuren dargestellte Zwischenschicht 11 kann ebenfalls eine Folienschicht sein, alternativ beispielsweise eine Schaumschicht bzw. ein offenporiges oder geschlossenporiges Schaummaterial. Weiterhin kann als Zwischenschicht 11 eine gedruckte oder anderweitig aufgebrachte Farb-, Lack- oder Klebstoffschicht vorgesehen sein. Die Schichtdicke der Zwischenschicht 11 bestimmt die Höhe der Kavität 4 und ist auf die Viskosität, Oberflächenspannung und/oder Einfüllmenge etc. der verwendeten Flüssigkeit abgestimmt.
Die Figuren 1B bis 1D zeigen in Querschnittsansicht alternative Ausführungsbeispiele hinsichtlich des Schichtaufbaus des Schichtverbunds 20, die insbesondere ohne Zwischenschicht 11 auskommen. Gemäß Figur 1B ist die Kavität 4 in einer der beiden Folien, beispielsweise in einer ersten, unteren Folie 1, als bereichsweise Dünnung bzw. Vertiefung oder Ausnehmung ausgebildet. Die andere Folie 2 kann vollflächig mit einheitlicher Schichtdicke ausgebildet sein und seitlich außerhalb der Kavität 4 direkt mit der ersten Folie 1 verbunden sein. Figur 1C zeigt ein Ausführungsbeispiel, bei dem beide Folien 1, 2 eine Vertiefung, Aussparung oder sonstige Ausnehmung aufweisen, die gemeinsam die Kavität 4 bilden. Seitlich außerhalb von ihr sind beide Folien 1, 2 fest miteinander verbunden, etwa verklebt, verschweißt oder in sonstiger Weise aneinander befestigt, insbesondere luftdicht und/oder flüssigkeitsdicht in Bezug auf die im Inneren der Kavität 4 enthaltene Flüssigkeit 5 und die umgebende Atmosphäre. In den Ausführungsbeispielen der Figuren 1A bis 1C kann die Kavität 4 innerhalb der Grundfläche des Schichtverbunds 20 so geformt sein, dass sie sich über das durch die mindestens eine Haltestruktur 6 umgrenzte erste Teilvolumen 4a allseitig hinaus erstreckt. Sie kann auch auf einer Seite oder in einer Richtung sowie ggfs. in deren Gegenrichtung eine besonders große Erstreckung besitzen. Beispielsweise ist eine kreissymmetrischs bzw. runde oder eine spiegelsymmetrische, insbesondere rechteckige Kavitätsgrundfläche mit den Querschnittsansichten der Figuren 1A bis 1C vereinbar. So kann die Kavität 4 bzw. deren Grundfläche etwa als längliche Bahn zur Messung von Beschleunigungskräften entlang vordefinierter Richtungen ausgebildet sein. In einem bestimmten Bahnabschnitt, beispielsweise in der Mitte der Kavität kann die mindestens eine Haltestruktur 6 und der dadurch festgehaltene Flüssigkeitstropfen 15 oder Flüssigkeitsvorrat 25 angeordnet sein.

Figur 1D zeigt ein Alternativbeispiel, bei dem die Flüssigkeit 5 in der Nähe eines Randes der Kavität 4 angeordnet ist. Auch hier kann die Kavität 4 in der Draufsicht auf ihre Grundfläche (nicht dargestellt) beispielsweise als längliche Bahn mit beispielsweise rechteckigem, länglichen Querschnitt geformt sein. Gemäß Figur 1D befindet sich die mindestens eine Haltestruktur 6 und der dadurch fixierte Flüssigkeitstropfen 15, d.h. das bestimmungsgemäß damit ausgefüllte erste Teilvolumen 4a, nah an einem ersten, in der Zeichenebene linken Ende der Kavität 4. In Figur 1D ist ferner jeweils mindestens eine erhabene, d.h. emporragende Haltestruktur 6 in Form einer ringförmigen Erhebung auf beiden Folien 1, 2 vorgesehen, wohingegen in Figur 1C ausschließlich in der zweiten Folie 2 eine Haltestruktur vorgesehen ist, und zwar als Vertiefung in der unteren Folie 1.

Als Materialien für die erste 1 und/oder zweite Folie 2 der Figuren 1A bis 1D sowie aller nachfolgenden Figuren können Kunststoffe, beispielsweise Polyethylenterephthalat (PET), Polyethylen (PE), Polypropylen (PP), Polyvinylchlorid (PVC) oder Kapton (d.h. ein Polyimid) verwendet werden. Die Folien können alternativ hinreichend stabile, mechanisch belastbare und luft- sowie flüssigkeitsundurchlässige Lackschichten, Farbschichten oder sonstige Materialien sein, die auf die Oberflächenspannung, Benetzungsfähigkeit, Adhäsionskraft und/oder Viskosität der zwischen ihnen eingebrachten Flüssigkeit 5 abgestimmt sind. Jede dieser Folien 1, 2 kann aus einer oder aus mehreren Schichten bzw. Teilschichten bestehen, beispielsweise um die Kavität gemäß den Figuren 1B bis 1D besonders einfach fertigungstechnisch zu realisieren.

Die Figuren 1A bis 1D zeigen außerdem schematisch einige exemplarische Ausführungsbeispiele hinsichtlich der Formgebung und Positionierung der mindestens einen Haltestruktur 6; diese Ausführungsbeispiele sind - unabhängig von dem exemplarisch gewählten Schichtaufbau der Figuren 1A bis 1D - mit einem beliebigen Schichtaufbau sowie mit allen übrigen Merkmalen der Ausführungsbeispiele dieser Anmeldung kombinierbar. Figur 1A zeigt exemplarisch ein Paar von (ringförmigen) Haltestrukturen 6, die auf den einander zugewandten Flächen beider Folien 1, 2 ausgebildet und deckungsgleich übereinander angeordnet sind; ihr Abstand voneinander entspricht der Höhe bzw. Dicke der Kavität. In Figur 1A bildet die jeweilige Haltestruktur 6 eine lokale Unebenheit 8, insbesondere einen Bereich künstlich vergrößerter Rauigkeit oder eine anderweitige Vertiefung, Aufwerfung und/oder Stufe. Sie ist z.B. eine Ritzlinie, Stanzlinie, Prägelinie, Laserlinie oder eine sonstige Struktur mit einem beliebigen Querchnittsprofil. Sie begrenzt von außen einen mittleren Flächenabschnitt, in welchem die Flüssigkeit 5 die jeweilige Folie 1, 2 selektiv berühren soll, jedenfalls solange der Schichtverbund 20 des Stoßsensors 10 noch keiner über der Nachweisgrenze liegenden Stoßbelastung oder Beschleunigung ausgesetzt worden ist. Aufgrund des wie in Figur 1A gezackten oder anderweitig unebenen Linienprofils quer zum Verlauf der Linie (mit Vertiefungen in der jeweiligen Folie und/oder mit seitlichen Erhebungen oder Aufwerfungen) ist die Flüssigkeitsmenge 5 nicht ohne Weiteres in der Lage, die jeweilige Haltestruktur 6 zu überqueren, da die Oberflächenspannung und/oder der lokal unebene Oberflächenverlauf im Bereich der Haltestrukturen 6 eine weitere Benetzung der Folienoberfläche durch die Flüssigkeit 5 verhindert. Die Haltestruktur 6 bildet eine Grenze zum zweiten Teilvolumen 4b, in welches die Flüssigkeitsmenge erst durch Einwirkung äußerer Stöße einzudringen vermag. Figur 1B zeigt alternativ eine Haltestruktur 6 auf nur einer der Folien, und zwar als Erhebung, die in die Kavität 4 hineinragt. Die Haltestruktur 6 kann beispielsweise eine Druckstruktur aus Druckfarbe oder Druckmasse einer bestimmten Schichtdicke sein. Sie kann vorzugsweise farbig bzw. gefärbt oder alternativ farblos oder sogar transparent sein; die Bezeichnung Druckmasse deutet lediglich an, dass ein Druckprozess zum Anbringen der Haltestruktur 6 angewandt wurde. Wenngleich in Figur 1B an der anderen Folie keine vergleichbare Haltestruktur abgebildet ist, kann sich die Flüssigkeit dort in seitlicher Richtung wegen der Oberflächenspannung der Flüssigkeitsoberfläche nicht ohne Weiteres begrenzt ausbreiten. Auch in Figur 1C befindet sich die Haltestruktur 6 nur an einer Folie 1 und ist hier als Vertiefung 6b ausgebildet. In Figur 1D hingegen sind Haltestrukturen 6 an den Flächen beider Folien 1, 2 ausgebildet, die in Richtung senkrecht zum Schichtverbund miteinander fluchtend positioniert sind. Die in diesen und den nachfolgenden Figuren dargestellten Haltestrukturen 6 sind beispielsweise Haltestege, etwa geritzte, gestanzte, gedruckte, gelaserte, geprägte oder durch Gasphasenabscheidung (PVD, CVD) oder sonstige Arbeitsschritte erzeugte räumliche Strukturelemente, die jedoch - entgegen der vergrößerten, nicht maßstabsgetreuen Darstellung in den Figuren, die lediglich der besseren Erkennbarkeit dient - so niedrig sind, dass die Haltestrukturen 6 im Rahmen der Fertigung des Schichtverbunds 20 erzeugbar sind, ohne dass eine komplexe, dreidimensionale Formgestaltung erforderlich wäre, um im Stoßsensor 10 die Flüssigkeit 5 in Position zu halten.

In den Figuren 1A bis 1D ist die im Kavitätsvolumen freiliegende Flüssigkeitsoberfläche in der jeweiligen Querschnittsansicht teils konvex, teils konkav dargestellt. Der jeweilige Verlauf der Flüssigkeitsoberfläche ist in der Praxis durch die Dosierung der eingebrachten Flüssigkeitsmenge, durch die Art und Zusammensetzung der Flüssigkeit, durch die Auswahl des Materials für die Folien 1, 2 (entsprechend der gewünschten Adhäsionsstärke, Benetzung und/oder Oberflächenspannung an der Grenzfläche zwischen der Flüssigkeit und der jeweiligen Folie) und nicht zuletzt durch die Höhe, d.h. die senkrecht zum Schichtverbund gemessene Ausdehnung der Kavität und ferner durch die räumliche Erstreckung und den Verlauf der Haltestruktur 6 oder Haltestrukturen 6 an der jeweiligen Folienfläche beeinflussbar.

Als Flüssigkeit einsetzbar sind beispielsweise Wasser oder eine wässrige Lösung, flüssige niedermolekulare Polymere, Oligomere oder Monomere oder konkrete Substanzen wie beispielsweise Glyzerin, Polyethylenglykol, Glykol, Quecksilber oder Gallium; ferner ionische Flüssigkeiten oder polare Kohlenwasserstoffe wie beispielsweise Alkohole, Aldehyde oder Carbonsäuren. Insbesondere Flüssigkeiten mit einem hohen Siedepunkt und/oder einem niedrigen Dampfdruck sind geeignet, um einem vorzeitigen Verdampfen eines nennenswerten Teils der Flüssigkeit während der Herstellung, des Transports und der Lagerung und schließlich der u.U. längeren Gebrauchszeitdauer des Stoßsensors vorzubeugen. Ein hoher Siedepunkt bzw. niedriger Dampfdruck verhindert außerdem, dass ein Teil der Flüssigkeit im zweiten, beispielsweise gasgefüllten Teilvolumen 4b kondensiert und dort mit einem Füllmaterial, Indikatormaterial oder sonstigem Material, das zum Nachweis einer Beschleunigung dient, unbeabsichtigt eine Stoßerkennung veranlasst, ohne dass ein Stoß tatsächlich stattgefunden hätte.

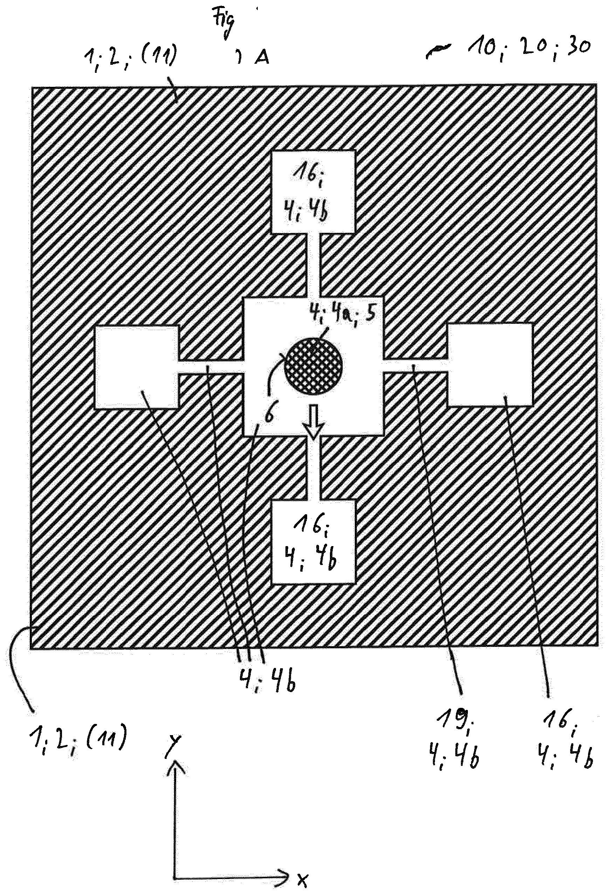

Die Figuren 2A bis 2C zeigen in schematischer Schnittansicht des Schichtverbunds 20 - in Höhe der Kavität - erste Ausführungsbeispiele, die einen richtungsabhängigen Nachweis auftretender Beschleunigungskräfte ermöglichen. Mit Bezug auf diese sowie alle weiteren Figuren der Anmeldung, in denen ebenfalls Schnittansichten aus Richtung der Draufsicht dargestellt sind, wird der Kürze halber in der Beschreibung die die Kavität umgebende Schicht als Zwischenschicht 11 bezeichnet; analog zur Zwischenschicht 11 aus Figur 1A. Dessen ungeachtet jedoch kann diese Zwischenschicht 11 ebenso auch entfallen und stattdessen die jeweilige Figur eine Schnittansicht in Höhe eines Teils der ersten und/oder zweiten Folie 1; 2, der die Kavität 4 umgibt, darstellen. Somit ist ungeachtet der Wortwahl in der nachstehenden Beschreibung hinsichtlich der abgebildeten Schicht der Schichtverbund ebenso auch gemäß den Figuren 1B bis 1D ausbildbar.

Figur 2A zeigt in schematischer Schnittansicht eine Kavität 4 mit einem mit der Flüssigkeit 5 ausgefüllten ersten Teilvolumen 4a. Dessen Rand ist durch die Form, d.h. den Verlauf der hier ringförmigen Haltestruktur 6 an einer oder an beiden Folien 1; 2 (in Höhe oberhalb und/oder unterhalb der Zeichenebene) vordefiniert. Die Gestalt und Größe der Haltestruktur oder Haltestrukturen 6, hier insbesondere der Durchmesser bzw. Radius der kreislinienförmigen, in sich geschlossenen Haltestruktur oder Haltestrukturen 6, legt im Wesentlichen fest, wo innerhalb der Grundfläche der Kavität die Flüssigkeit bis zum Einwirken äußerer Stöße festgehalten wird. Die Flüssigkeitsmenge 5 wird gemäß der Dicke bzw. Höhe der Kavität und gemäß der Flächenausdehnung des durch die Haltestruktur 6 umschlossenen Flächenstücks (Teilfläche der an die Kavität angrenzenden ersten und/oder zweiten Folie) geeignet gewählt. Der in Figur 2A gewählte Durchmesser des Flüssigkeitstropfens entspricht daher im Wesentlichen der Lage und dem Durchmesser der Haltestruktur oder Haltestrukturen 6 am Boden und/oder an der Decke der Kavität. Der überwiegende, restliche Teil der Kavität 4 ist mit Luft oder einer sonstigen gasförmigen Atmosphäre gefüllt und bildet das zweite Teilvolumen 4b; er weist in vier Richtungen beabstandet von der mindestens einen Haltestruktur 6 jeweils eine seitliche Ausbuchtung 16 auf, die zum Auffangen der Flüssigkeit bestimmt ist. Wenn beispielsweise eine äußere Stoß- oder sonstige Krafteinwirkung den Stoßsensor 10 in positive Richtung y beschleunigt und eine ausreichende Stärke besitzt, wird die Flüssigkeit 5 in Pfeilrichtung, d.h. in negative y-Richtung beschleunigt und in die in Figur 2A unten dargestellte Ausbuchtung 16 bewegt. Dort kann sie durch ein geeignetes Material (siehe weiter unten) oder auch schon davor, etwa durch eine Formgebung der Kavität mit geeigneter Kapillarwirkung, dauerhaft eingefangen und/oder zur Veranlassung einer Nachweisreaktion verwendet werden. Im Beispiel der Figur 2A ist vor allen seitlichen Ausbuchtungen 16 jeweils eine Verengung mit lokal verengtem Querschnitt, d. h. mit verringerter Breite angeordnet, die als Kapillarstruktur 19 dient.

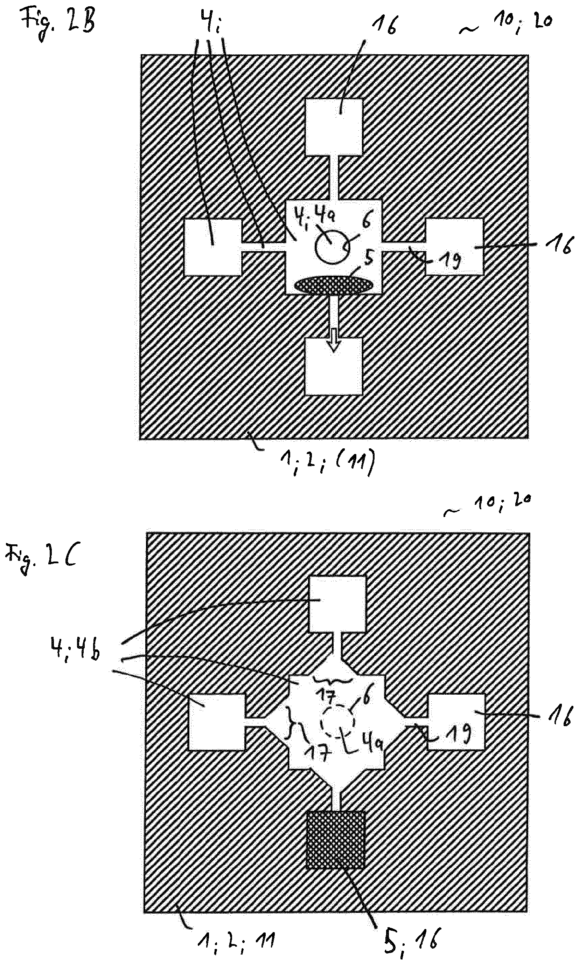

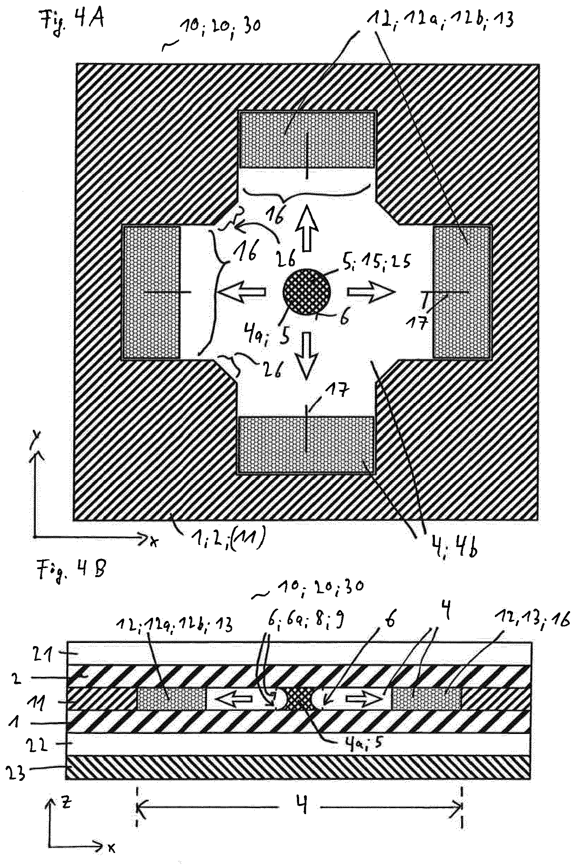

Figur 2B zeigt schematisch vereinfacht die Position des beschleunigten Flüssigkeitstropfens 5 nach dem seitlichen Austreten aus der mindestens einen Haltestruktur 6, unmittelbar vor Eindringen in die Kapillarstruktur 19, und Figur 2C zeigt die nach dem Stoß letztendlich in der seitlichen Ausbuchtung 16 eingefangene Flüssigkeitsmenge 5, nachdem sie die Kapillarstruktur 19 passiert hat. Als weitere Abwandlung sind in Figur 2C sich verengende Führungsstrukturen 17 dargestellt, die ein Eindringen der Flüssigkeit in die Kapillarstrukturen 19 erleichtern. Anstelle dieser allein durch die Form der Kavitätsgrundfläche und deren Seitenwandverläufe gebildeten Führungsstrukturen 17 können auch echte Führungsstrukturen im engeren Sinne (siehe die nachfolgenden Ausführungsbeispiele ab Figur 4) direkt auf der Oberfläche der ersten und/oder zweiten Folie 1, 2 vorgesehen sein, um eine Flüssigkeitsmenge, die einmal aus dem durch das Halteelement 6 umgrenzten ersten Teilvolumen 4a ausgetreten ist, noch zielgerichteter in Richtung einer jeweiligen Ausbuchtung 16 oder eines darin angeordneten Füll- oder Indikatormaterials zu befördern. Das in den Figuren 2A bis 2C die Kavität 4 umgebende Material ist wahlweise ein Material der ersten 1 und/oder zweiten Folie 2 und/oder ein Material einer zwischen beiden Folien 1, 2 angeordneten Zwischenschicht 11.

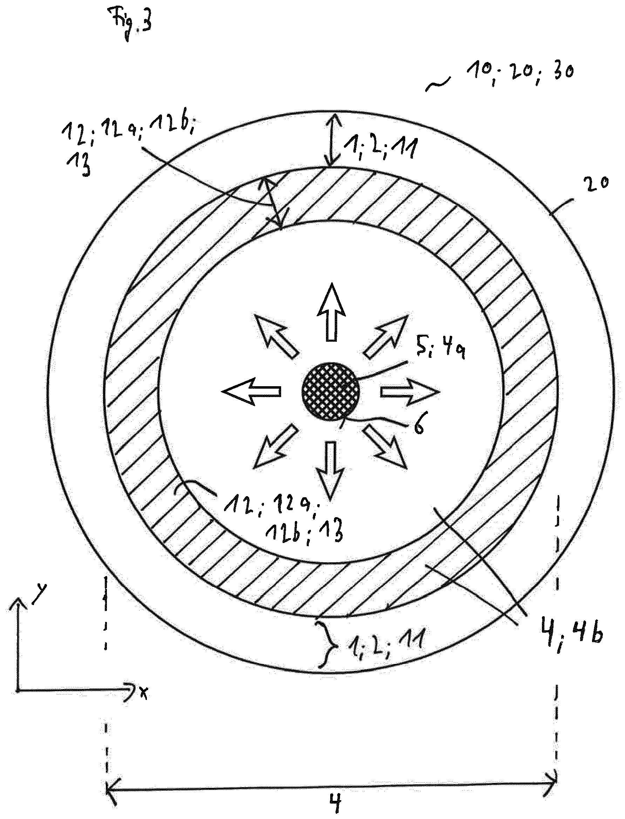

Figur 3 zeigt in schematischer Querschnittsansicht senkrecht zur Grundfläche des Stoßsensors ein erstes Ausführungsbeispiel, bei dem in der Kavität 4 beabstandet zur mindestens einen Haltestruktur 6 und somit beabstandet zum ersten Teilvolumen 4a ein Material 12 angeordnet ist, das beim Kontakt mit aus dem ersten Teilvolumen 4a ausgetretener Flüssigkeit 5 zu einer sichtbaren Veränderung, etwa einer dauerhaften Veränderung und/oder Fixierung der Flüssigkeitsverteilung innerhalb der Kavität, oder zu einer chemischen Reaktion oder einer sonstigen, anderweitig mess- oder feststellbaren Veränderung führt, die zum Nachweis und zur dauerhaften Anzeige der zumindest einmalig aufgetretenen Stoß-, Kraft- oder Beschleunigungseinwirkung ausreichender Mindeststärke geeignet ist. In Figur 3 ist der Schichtverbund 20 des Beschleunigungssensors 10 beispielsweise kreisringförmig ausgebildet; am äußersten Rand sind zumindest die erste und die zweite Folie übereinander gestapelt; optional zwischen ihnen noch eine Zwischenschicht 11. Vorzugsweise fluchten ihre Außenränder miteinander (äußerste Kreislinie in Figur 3); alternativ erstrecken sie sich außen über den dargestellten Flächenabschnitt hinaus. Zumindest aber die äußere Kontur der Kavität 4 und zugleich ihres zweiten Teilvolumens 4b ist innerhalb der Grundfläche des Schichtverbunds 20 kreisförmig (zweitäußerste Kreislinie in Figur 3) gewählt; dort befindet sich innerhalb des die Kavität begrenzenden Randes ein hier ringförmig dargestelltes Materialstück 13 aus einem Material 12, das zum Nachweis und zur dauerhaften Anzeige dient, dass die Flüssigkeit 5 den Außenrand der Kavität erreicht hat. Mit Hilfe des Materials 12 ist somit dauerhaft anzeigbar, dass die Flüssigkeit 5 zu einem beliebigen früheren Zeitpunkt unter Stoßeinwirkung aus dem zentral angeordneten, mittleren (ersten) Teilvolumen 4a ausgetreten ist, das durch die auf einer oder auf beiden Folien 1, 2 vorhandenen Haltestruktur 6 umgeben wird. Die Position des Materials 12 in Figur 3 entspricht beispielsweise der in den Figuren 1A und 1B gestrichelten angedeuteten Position für den Fall, dass die dortigen Kavitäten 4 in der Draufsicht ebenfalls kreisförmig gestaltet sind. Bei allen Figuren und sonstigen Ausführungsformen der Anmeldung, bei denen ein Material 12 vorgesehen ist, kann dieses beispielsweise ein Füllmaterial 12a sein, das beim Kontakt mit der Flüssigkeit 5 diese dauerhaft festhält, aufsaugt oder anderweitig bindet. Das Füllmaterial 12a kann insbesondere porös, schaumförmig, aufquellbar oder in sonstiger Weise saugfähig sein. Das Material 12 bzw. Füllmaterial kann beispielsweise ein Stoff, ein Papier, ein Vlies, eine Druck- oder Lackschicht, ein gewebtes (woven) oder nicht gewebtes (non-woven) Material, ein maschenartiges Material (mesh-Gewebe) oder ein sonstiger organischer oder anorganischer Absorberstoff zum Aufnehmen und/oder Binden der Flüssigkeit 5 sein. Das Material 12 kann offenporig oder geschlossenporig sein, braucht aber - anders als das Material der Zwischenschicht 11 - weder eine vorgegebene Höhe oder Schichtdicke zu besitzen noch die Kavität über ihre vollständige Höhe auszufüllen. Anstelle eines Materialstücks 13 kann das Material 12 ebenso auch einen Materialauftrag, eine Ansammlung von kornförmigen oder pulverförmigen Partikeln oder ein Aufdruck oder Anstrich auf einer der Folien 1, 2 oder auf beiden Folien sein.

Das Material 12, das gemäß einer der hier genannten Applikationsformen vorliegt, braucht jedoch nicht unbedingt ein Füllmaterial zu sein. Gemäß einer alternativen Ausführungsform handelt es sich bei dem Material 12 stattdessen um ein Indikatormaterial 12b, welches beim Kontakt mit der Flüssigkeit chemisch oder auf sonstige, visuell beobachtbare oder messbare Art und Weise mit der Flüssigkeit oder einer darin enthaltenen Substanz reagiert. Während im Falle einer Füllmasse bzw. eines Füllmaterials 12a eine gewisse Mindestmenge erforderlich ist, um eine ausreichende Flüssigkeitsmenge aufsaugen oder binden zu können, kann im Falle eines Indikatormaterials 12b eine äußerst geringe Menge dieses Materials 12; 12b; 13 genügen, um eine deutlich sichtbare oder deutlich messbare Nachweisreaktion herbeizuführen und dauerhaft zu konservieren. Beispielsweise braucht das Indikatormaterial, anders als in Figur 1A und 1B angedeutet, nur einen geringen Teil der Höhe der Kavität 4 auszufüllen; es kann beispielsweise auf eine der angrenzenden Folienflächen aufgedruckt, aufgestrichen oder in sonstiger Weise aufgetragen sein.

Das Material 12 dient somit als Anzeigematerial zum Anzeigen des Auftreffens von Flüssigkeit im Bereich dieses Materials 12. Im einfachsten Fall zeigt sich der Kontakt des Materials 12 mit der Flüssigkeit 5 durch eine Farbveränderung, beispielsweise infolge der Indikatoreigenschaften des Materials 12; 12a, welches beispielsweise beim Kontakt mit der Flüssigkeit eine Säure-Base-Reaktion, eine Redoxreaktion, eine Komplexbildungsreaktion oder eine sonstige chemische Nachweisreaktion hervorruft. Die Reaktion muss nicht zwangsläufig mit der Flüssigkeit selbst stattfinden; sie kann ebenso zwischen einem darin gelösten oder anderweitig enthaltenen Stoff und dem Indikatormaterial 12b stattfinden. Somit kann beispielsweise Wasser oder eine sonstige, preiswerte, gesundheitsunschädliche, umweltfreundliche und/oder farblose Flüssigkeit verwendet werden. Beispielsweise kann als Flüssigkeit eine Flüssigkeit ausreichend niedrigen Dampfdrucks und/oder ausreichend hohen Siedepunkts oder ggfs. auch Wasser, insbesondere Wasser, das selbst keine Farbstoffe enthält, verwendet werden, wobei beim Auftreffen des Wassers oder der sonstigen Flüssigkeit auf das Material 12 ein Farbstoff aus diesem Material 12 herausgelöst oder verflüssigt oder in sonstiger Weise gebildet oder umgewandelt wird. Beispielsweise ist durch das Auftreffen der Flüssigkeit ein Ausbluten, d.h. flächiges Verlaufen oder Auslaufen eines ursprünglich nur im Bereich des Materials 12; 12b; 13 enthaltenen Farbstoffs erzeugbar, das optisch leicht erkennbar ist.

Hinsichtlich der seitlichen Positionierung und Verteilung des Materials 12; 12a; 12b sind Figur 3 und die nachfolgenden Figuren lediglich exemplarisch; anstelle eines einzigen Materialstücks 13 oder eines einzigen zusammenhängenden, mit dem Material 12 durchgängig versehenen Gebiets (in Figur 3 beispielsweise nahe des Außenrandes der Kavität 4 entlang laufend und in sich geschlossen) kann auch eine Mehrzahl voneinander räumlich getrennter Materialstücke 13 oder mit dem Material 12 versehener Bereiche vorgesehen sein, um die Richtung eines aufgetretenen Stoßes noch präziser anzuzeigen.

Der Stoßsensor 10 der Figuren 1A bis 1D braucht nur ein einziges Stück oder einen einzigen Bereich des Materials 12 (Füll- 12a oder Indikatormaterial 12b) aufzuweisen, wie in Figur 3 exemplarisch dargestellt ist. Alternativ kann der Stoßsensor 10 mehrere Stücke, Segmente oder anderweitige Bereiche eines solchen Materials 12 aufweisen, um eine Erkennung und/oder Anzeige der Richtung aufgetretener Beschleunigungen oder Stöße zu ermöglichen, wie beispielsweise anhand der Figuren 2A bis 2C oder der nachfolgenden Figuren 4A bis 6 erläutert ist. Selbstverständlich können der Schichtaufbau in Richtung z der Flächennormalen des Schichtverbunds 20 einerseits und die Ausdehnung, Kontur, Geometrie und sonstige Gestaltung der Kavität 4 andererseits (einschließlich der Anordnung und Verteilung des Materials 12; 12a; 12b innerhalb der Grundfläche der Kavität 4) unabhängig voneinander gewählt und optimiert werden. Unabhängig von diesen Wahlmöglichkeiten kann auch die Art, Form, Anzahl und/oder Herstellungsweise der Haltestege oder der sonstigen Haltestrukturen 6 beliebig gewählt und optimiert werden, d.h. unabhängig davon, anhand welcher der konkreten Figuren die jeweilige Ausführungsform der Haltestruktur 6 in dieser Anmeldung erläutert wird. Weiterhin können die Flüssigkeit und/oder in ihr enthaltene Substanzen sowie die Art des Nachweismaterials 12; 12a; 12b; 13 - unabhängig von den übrigen oben genannten Merkmalen der jeweiligen Ausführungsformen des Stoßsensors - gewählt und optimiert werden. Dies gilt ebenso für alle nachfolgend beschriebenen Ausführungsbeispiele.

Die Art und Zusammensetzung der Flüssigkeit wird in geeigneter Weise gewählt, insbesondere je nach Art des Nachweismaterials 12, der geometrischen Form oder sonstiger Eigenschaften der Haltestruktur 6, ferner je nach Art des Materials der ersten und/oder zweiten Folie und/oder in Abhängigkeit von den räumlichen Abmessungen, insbesondere der Dicke bzw. Höhe der Kavität. Beispielsweise kann die Flüssigkeitsmenge und/oder die Art der Flüssigkeit, insbesondere die Stärke ihrer Viskosität und/oder ihrer Oberflächenspannung, an den Abstand beider Folien 1, 2 im Bereich der Kavität oder an sonstige geometrische oder sonstige Merkmale des Schichtverbunds 20 angepasst werden. Weitere Einflussgrößen zum Dosieren und Auswählen der Flüssigkeit sind beispielsweise die Rauheit der Oberflächen der Deckelschichten bzw. Folien 1, 2, die die Kavität auf beiden Seiten begrenzen, oder die Länge und/oder der Durchmesser von Kapillarstrukturen 19, wie sie beispielsweise oben anhand der Figuren 2A bis 2C exemplarisch erläutert sind.

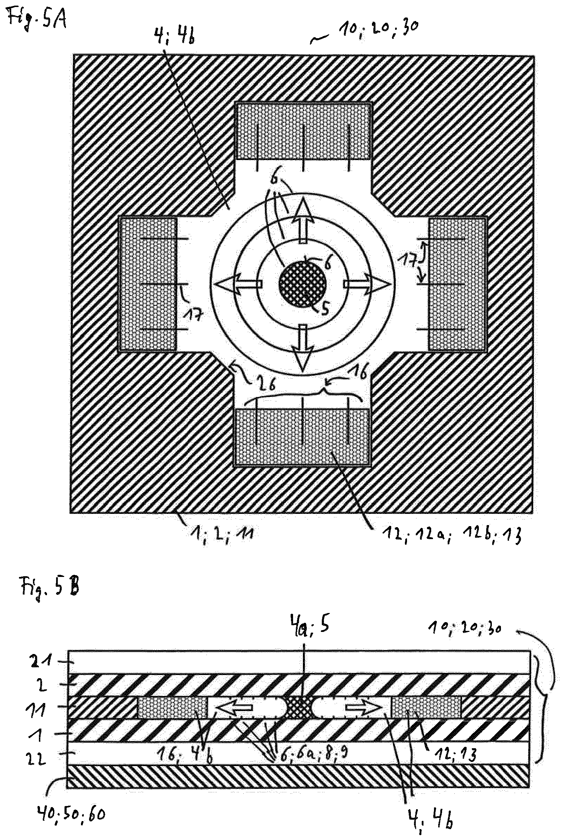

Die Figuren 4A bis 6 zeigen Ausführungsbeispiele eines Stoß- oder Beschleunigungssensors 10, dessen Schichtverbund 20 eine Kavität 4 mit einer Mehrzahl von seitlichen Ausbuchtungen 16 aufweist, in denen jeweils separate Stücke oder Bereiche eines Materials 12 (beispielsweise Füllmaterial 12a oder Indikatormaterial 12b) zum richtungsabhängigen Nachweis des erfolgten Austritts von Flüssigkeit aus dem ersten Teilvolumen 4a der Kavität 4 angeordnet sind. Die Figuren 4A, 5A und 6 zeigen hierzu Schnittansichten aus Richtung der Flächennormalen des Schichtverbunds 20 in Höhe der Kavität 4; die Figuren 4B und 5B zeigen Querschnittsansichten quer zur Höhe des Schichtverbunds.

Gemäß Figur 4 weist die Kavität 4 vier seitliche Ausbuchtungen 16, Taschen oder sonstige Arten von äußeren Aufweitungen oder seitlichen Ausläufern auf. Der zentrale, mittlere Bereich der Kavität 4, oberhalb dessen und/oder unterhalb dessen die Haltestruktur 6 oder die Mehrzahl von Haltestrukturen 6 ausgebildet ist, ist von einer Anzahl von Ausbuchtungen 16 mit jeweils einem separatem Stück oder Bereich des Materials 12; 12a; 12b zum Nachweis des Flüssigkeitsaustritts umgeben. Die seitlichen Ausbuchtungen 16 sind Bereiche der Kavität 4, die eine größere Ausdehnung bzw. Erstreckung in einer jeweiligen Richtung weg von der Haltestruktur 6 besitzen. Die Ausbuchtungen 16 sind somit diejenigen Bereiche der Kavität 4, deren Außenumfang den größten Abstand von der Mitte oder dem Zentrum, insbesondere Symmetriezentrum der Kavität 4 besitzt. Insbesondere weist die Kavität 4 zwischen jeweils zwei benachbarten Ausbuchtungen 16 jeweils eine Einbuchtung 26 auf, deren seitliche Außenwand einen kleineren Abstand von der Mitte oder dem Zentrum, insbesondere Symmetriezentrum der Kavität 4 besitzt als die ihr benachbarten Ausbuchtungen 16. Somit ist die Seitenwand der Kavität 4 im Bereich der Ausbuchtungen 16 weiter von dem Zentrum der Kavität oder jedenfalls von der Haltestruktur 6 oder Mehrzahl von Haltestrukturen 6 entfernt als im Bereich der Einbuchtungen 26.

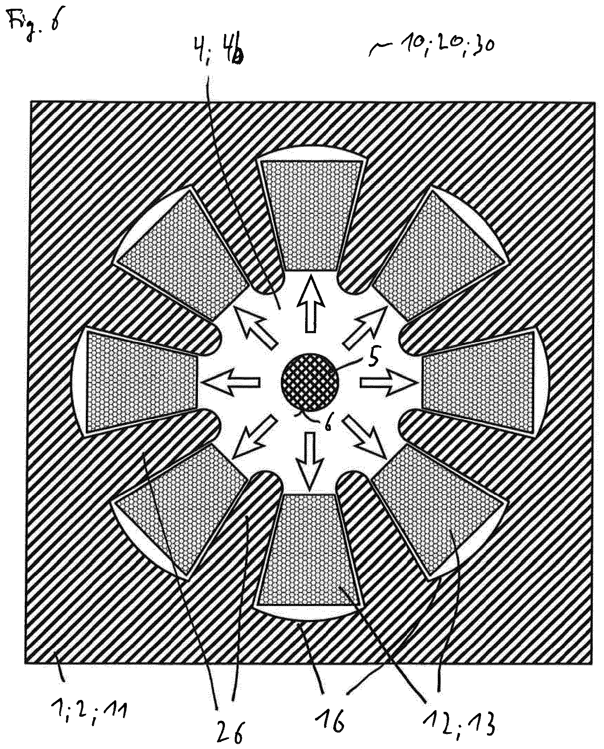

In der Querschnittsansicht der Figur 4B sind beiderseits der Haltestrukturen 6 bzw. der Flüssigkeit 5 zwei der vier Ausbuchtungen aus Figur 4A dargestellt, in denen jeweils das Material 12; 12a; 12b; 13 vorgesehen ist. Der Sensor 10 gemäß Figur 4A und Figur 4B, bei dem die Kontur der Kavität 4 innerhalb der Grundfläche des Schichtverbunds 20 im Wesentlichen kreuzförmig oder allgemeiner sternförmig (vgl. Figur 6) ausgebildet ist, ermöglicht den Nachweis von Stößen vorgegebener Mindeststärke und zugleich die Anzeige der Richtung solcher Stöße; gemäß Figur 4A und 4B entlang jeweils positiver wie auch negativer x-Richtung und y-Richtung. Zwar wird im Allgemeinen die Richtung eines Stoßes von diesen Vorzugsrichtungen abweichen, jedoch wird immer dann, wenn die Komponente bzw. Vektorkomponente der Beschleunigung in Richtung parallel zum Schichtverbund ausreichend groß ist, dass der Flüssigkeitstropfen 5; 15 den durch die Haltestruktur 6 umgrenzten Mitten- oder Zentralbereich (erstes Teilvolumen 4a) verlässt, dieser in Richtung eines oder maximal zweier einander benachbarter Ausbuchtungen bzw. Materialstücke 13 bewegt werden, sodass dort die Flüssigkeit aufgesaugt wird oder eine Nachweisreaktion, etwa eine Farbreaktion entsteht.

Auch bei Verwendung eines Indikatormaterials 12b ist vorzugsweise vorgesehen, dass dieses oder ein zusätzliches saugfähiges Material so beschaffen ist, dass es die gesamte auftreffende Flüssigkeitsmenge aufsaugt oder bindet, damit ein späteres Umherwandern einmal ausgetretener Flüssigkeit hin zu weiteren Materialstücken 13 in anderen Ausbuchtungen 16 verhindert wird. Dadurch bleibt die Flüssigkeitsaufnahme und/oder die Indikatorreaktion auf diejenigen Ausbuchtungen 16 bzw. Materialstücke 13 beschränkt, auf die die ausgetretene Flüssigkeitsmenge unmittelbar nach dem Stoß zuerst auftrifft. Eine einmal hervorgerufene Richtungsanzeige einer Beschleunigung oder eines Stoßes bleibt daher auf Dauer erhalten.

Durch die Geometrie der Kavität und/oder der Haltestrukturen 6 an den Folien 1; 2, durch die Art und Menge der Flüssigkeit sowie durch die übrigen oben aufgezählten Merkmale ist der Schichtverbund 20 des Stoßsensors 10 so ausbildbar, dass der Stoßsensor 10 bei Stößen oder Beschleunigungen oberhalb einer bestimmten Stärke, d.h. oberhalb eines bestimmten Grenzwerts oder Grenzbereichs auf der Stärkenskala, zuverlässig (d.h. in Bezug auf eine Vielzahl hergestellter, jeweils einmal auslösefähiger Stoßsensoren mit geringer Fehlerquote) auslöst. Bei schwächeren Stößen oder Beschleunigungen unterhalb des Grenzwerts oder Grenzbereichs auf der Stoßstärkenskala hingegen wird durch den vorgestellten Stoßsensor regelmäßig, d.h. zuverlässig keine Nachweisreaktion ausgelöst, weil der Flüssigkeitstropfen den Haltesteg oder die sonstige Ausführungsform der Haltestruktur 6 an der jeweiligen Folie nicht überqueren kann.

Figur 4B zeigt zusätzlich zu den Folien 1, 2 und der optionalen Zwischenschicht 11 (vgl. die Figuren 1A bis 1D) noch weitere Schichten, von denen zumindest eine, einige oder alle zusätzlich im Schichtverbund 20 bzw. Schichtenstapel des Stoß- oder Beschleunigungssensors enthalten sein können. So ist auf derjenigen Seite bzw. Hauptfläche der ersten Folie 1, die von der Kavität 4 abgewandt ist, eine Klebstoffschicht 22 vorgesehen. Dadurch lässt sich der Schichtverbund 20 insgesamt auf eine beliebige Unterlage oder eine sonstige, in beliebiger Richtung orientierte Fläche aufkleben, insbesondere an einem Paket, einer Verpackung, einem Gerät, einer größeren Anlage oder einem sonstigen Gegenstand, beispielsweise einem Medikamentenbehälter. Bei der Herstellung und Konfektionierung einer großen Menge von Sensoren 10 bzw. Etiketten 30 aus einem großflächigen Schichtverbund 20, etwa aus einem als Blattware oder Rollenware vorliegenden Schichtverbund 20, lässt sich eine Vielzahl von Etiketten 30 auf einer Trägerschicht 23 stanzen und/oder ggfs. zusammenhängend transportieren, indem die Trägerschicht nicht gestanzt oder nur angestanzt wird.

Auf derjenigen Hauptfläche der zweiten Folie 2, die von der Kavität 4 abgewandt ist, kann eine Dekorschicht oder eine sonstige Beschriftungsschicht 21 angeordnet sein, die mit einer Beschriftung bzw. einem Druckbild, einer sonstigen Information oder einem Symbol bedruckt oder in anderer Weise gestaltet ist. Die Beschriftungsschicht 21 oder alternativ die zweite Folie 2 bildet die Oberseite oder Außenseite des Etiketts 30; unabhängig von der Orientierung, in der es an einen auf Stöße zu überprüfenden Gegenstand aufgeklebt wird. In den oben erläuterten Figuren ist auf jeder Folie 1, 2 maximal ein einziges Halteelement bzw. eine einzige Haltestruktur 6 abgebildet. Alternativ kann auch eine Mehrzahl von Halteelementen 6 an der ersten Folie 1 und/oder an der zweiten Folie 2 vorgesehen sein, wie in dem Ausführungsbeispiel der Figuren 5A und 5B dargestellt ist. Gemäß Figur 5A sind beispielsweise vier Haltestrukturen 6 an, auf und/oder in derselben Folie 1 und/oder 2 ausgebildet. Beispielsweise kann die Folie 1 oder 2 oder können beide Folien 1, 2 eine Mehrzahl von Haltestegen oder sonstigen Ausführungsformen von Haltestrukturen 6 (s. oben) aufweisen, die beseipielsweise konzentrisch angeordnet sind. Es kann sich insbesondere um Haltestrukturen 6 handeln, die einander umschließen. Insbesondere kann eine Anordnung einander benachbarter Halteelemente 6 vorgesehen sein, von denen alle Halteelemente - bis auf das innerste und/oder kleinste Halteelement von ihnen - das erste Teilvolumen 4a der Kavität 4 in einem gewissen, jeweils unterschiedlichen großen Abstand, insbesondere Radius umlaufen. Gemäß Figur 5A sind die Haltestrukturen 6 linienförmig, insbesondere als konzentrische Kreise ausgebildet. Durch die Anzahl der Haltestrukturen 6 lässt sich der Grenzwert oder Grenzbereich der Beschleunigungsstärke, innerhalb dessen die Auslösewahrscheinlichkeit von einem niedrigen Wert (etwa kleiner als 10 Prozent) auf einen hohen Wert (etwa größer als 90 Prozent) ansteigt, in Richtung höherer Absolutwerte der Beschleunigung verschieben, da der Tropfen nach dem Überqueren der ersten, innersten Haltestruktur erst noch die umliegenden, weiteren Haltestrukturen 6 überschreiten muss, bevor er das Füll- oder Indikatormaterial 12; 12a; 12b erreichen kann. Auch bei Ausführungsformen mit nur einem einzigen, umlaufenden Materialstück 13 (Figur 3) kann eine Mehrzahl von Haltestrukturen 6 vorgesehen sein.
Die Haltestrukturen 6 können beispielsweise, wie in Figur 5B gezeigt, auf beiden einander zugewandten Hauptflächen der ersten 1 und der zweiten Folie 2 ausgebildet und in unterschiedlichem seitlichem Abstand von der Mitte oder dem Zentrum, insbesondere Symmetriezentrum der Kavität 4 angeordnet sein. Ferner kann, wie in Figur 5A dargestellt, an einer oder an beiden Folien 1, 2 pro Ausbuchtung 16, d.h. pro Materialstück 13, jeweils mindestens eine Führungsstruktur 17 vorgesehen sein, die von der Haltestruktur 6 (oder von der äußersten Haltestruktur einer Mehrzahl von Haltestrukturen) beabstandet ist und in die Ausbuchtung 16 hinein und/oder bis zum Nachweismaterial 12 führt.

Stellvertretend für alle übrigen Ausführungsformen dieser Anmeldung zeigt Figur 5B außerdem, dass der Stoßsensor 10 bzw. sein Schichtverbund 20 insbesondere als Etikett 30 ausgebildet sein kann, das auf einen beliebigen Gegenstand 60, etwa ein Paket 40 oder eine sonstige Verpackung 50 aufklebbar ist, um starke Stöße, die durch unsachgemäße Handhabung oder sonstige Einflüsse entstehen könnten, nachzuweisen und dauerhaft anzuzeigen. Die mit dem Etikett 30 beklebte Fläche kann beispielsweise eine Fläche eines Medikamentenbehälters, ihres Deckels oder ihrer Verpackung sein, beispielsweise die Stirnfläche bzw. Kopfseite einer Ampulle, eines Vials, eines sonstigen Medikamentenbehälters oder seines/ihres eines Verschlusses oder seiner/ihrer Umverpackung. Der Stoßsensor und insbesondere der Schichtverbund 20 kann zudem mit weiteren, sich über den Schichtverbund 20 hinaus erstreckenden Folien, insbesondere Kunststofffolien verbunden sein, insbesondere verklebt sein. Beispielsweise kann ein Etikett, das einen Außenumfang einer Ampulle, eines Vials oder eines sonstigen Medikamenten- oder Flüssigkeitsbehälters verschließt oder zum Etikettieren solch eines Behälters vorgesehen ist, den Stoßsensor 10 aufweisen, etwa in einem Teilflächenbereich, der bestimmungsgemäß eine Stirnfläche des Medikamenten- oder Flüssigkeitsbehälters überdeckt und den Schichtverbund 12 enthält. Somit können auch komplexere Etikettengeometrien realisiert werden, insbesondere seitlich außerhalb des Stoßsensors, um den Stoßsensor an Gegenständen mit mehreren, teils auch gekrümmten Flächen zu befestigen.

Anstelle von nur vier umgebenden Ausbuchtungen 16 mit Materialstücken 13 kann, wie in Figur 6 dargestellt, auch eine andere, insbesondere größere Anzahl von ihnen vorgesehen sein. Figur 6 zeigt exemplarisch acht symmetrisch um die mindestens eine Haltestruktur 6 angeordnete Ausbuchtungen 16, in denen jeweils ein Teil oder ein Stück des Füll- oder Indikatormaterials 12a; 12b angeordnet ist. Abgesehen vom seitlichen Außenumfang der Flüssigkeit 5, der die ungefähre Lage und Ausdehnung der einzigen oder ggfs. innersten Haltestruktur 6 andeutet, sind in Figur 6 keine weiteren Halte- oder Führungsstrukturen dargestellt.

Die Figuren 4A bis 6 zeigen somit jeweils eine kranzförmige, sternförmige oder in sonstiger Weise symmetrisch um die Haltestruktur(en) ausgebildete Anordnung von Detektorfeldern zum richtungsabhängigen Nachweis von Stößen. Bei Ausführungsformen dieser und anderer Figuren, bei denen Führungsstrukturen 17 vorgesehen sind, können diese in gleicher Weise wie die weiter oben beschriebenen Varianten der Haltestrukturen 6 ausgebildet sein, d.h. beispielsweise als geritzte, gedruckte, geprägte, gestanzte, mit einem Laser erzeugte oder z.B. durch Gasphasenabscheidung erzeugte Linien, insbesondere Erhebungen und/oder Vertiefungen, wie weiter oben beschrieben wurde. Dabei müssen die Haltestrukturen 6 und die Führungsstrukturen 17, sofern beide von ihnen vorgesehen sind, nicht zwangsläufig in der gleichen Art und Weise, Größe oder Herstellungsweise erzeugt oder ausgeformt sein.

Selbst wenn Haltestrukturen 6 und Führungsstrukturen 17 in einer Ausführung des Stoßsensors in derselben Weise ausgebildet, hergestellt oder (im Querschnitt, d. h. senkrecht zur jeweiligen Strukturlinie) geformt sein sollten, sind ihre Funktionen und technischen Wirkungen dennoch unterschiedlich, weil der Wasser- oder Flüssigkeitstropfen durch die Haltestruktur vollständig umlaufen und eingegrenzt wird, wohingegen eine einmal ausgetretene Wasser- oder Flüssigkeitsmenge 5 entlang einer Seite einer Führungsstrukturlinie 17 zunächst weiterlaufen kann, bis sie das Material 12 erreicht, und zwar ohne dass die Flüssigkeitsmenge dazu die Führungsstruktur 17 überqueren müsste. Somit können sowohl die Haltestrukturen 6 als auch die Führungsstrukturen 17 ein identisches Linienprofil bzw. einen identischen Linienquerschnitt aufweisen und/oder in derselben Art und Weise erzeugt sein, beispielsweise als geritzte Linien, aufgedruckte Erhebungen oder Emporwölbungen oder als Vertiefungen der jeweiligen Folienfläche.

Für die in der Anmeldung beschriebenen Ausführungsformen kann die Höhe der Kavität 4 beispielsweise zwischen 1,0 und 2,0 mm betragen. Sofern auf derselben Folie mehrere Haltestrukturen 6 vorgesehen sind, kann ihr radialer bzw. lateraler Abstand voneinander beispielsweise zwischen 0,5 mm und 3,0 mm betragen.

Die Führungslinien 17 können zur Erzeugung eines Kapillareffekts zwischen ihnen besonders dicht nebeneinander liegen, insbesondere näher als die Haltelinien voneinander. Auch auf diese Weise können geritzte oder anderweitig ausgebildete Führungsstrukturen 17 als Kapillarstrukturen 19 dienen (vgl. Figur 2A).

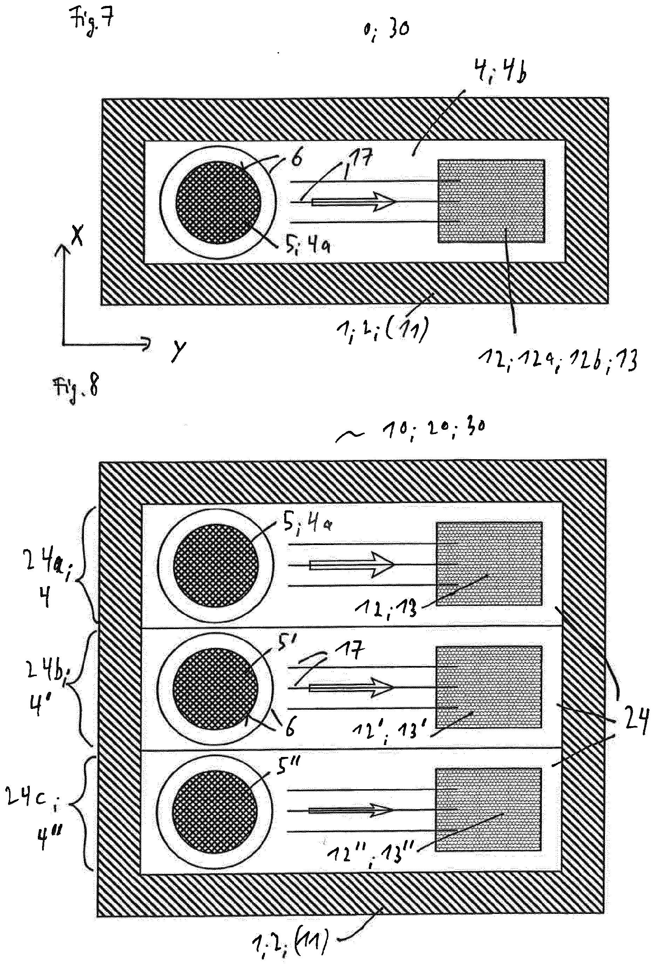

Figur 7 zeigt ein Ausführungsbeispiel eines Stoßsensors 10 zur Stoßdetektion entlang einer Vorzugsrichtung oder Messrichtung y. Die länglich ausgeformte Kavität 4 enthält auf einer Seite mindestens eine Haltestruktur 6, die eine Flüssigkeitsmenge 5 umgibt, und auf einer anderen, entgegengesetzten Seite ein Material 12, das zum Nachweis des Flüssigkeitsaustritts aus dem durch die Haltestruktur 6 vordefinierten ersten Teilvolumen 4a dient. Zwischen dem Material 12 und der mindestens einen Haltestruktur 6 kann eine Anzahl von Führungsstrukturen 17 vorgesehen sein. Die Kavität 4 ist beispielsweise durch eine oder beide Folien 1; 2 und/oder durch eine Zwischenschicht 11 umgeben.

Bei einer anderen, alternativen Bauweise ähnlich zu Figur 7 kann anstelle der mit dem Bezugszeichen 1, 2 bzw. 11 bezeichneten Umrandung der Kavität 4 an gleicher Stelle und mit gleichen seitlichen Abmessungen auch ein zweites Material oder Materialstück angeordnet sein, welches im Gegensatz zu dem Nachweismaterial 12 zwar bei Kontakt mit der Flüssigkeit diese aufsaugt oder bindet, jedoch nicht zu einem Farbumschlag oder einer sonstigen Anzeige eines Stoßes führt. Dadurch lässt sich vermeiden, dass im Falle starker Stöße, welche die Flüssigkeit in andere Richtungen aus dem ersten Teilvolumen 4a befördern, die Flüssigkeit nachträglich, d.h. durch Umherwandern innerhalb des zweiten Teilvolumens 4b, doch noch in Richtung des Nachweismaterials 12 gelangt und trotz völlig unterschiedlicher Stoßrichtung zu einem Auslöseereignis bzw. einer Stoßanzeige führt. Sofern ein solches zweites Material oder Materialstück vorgesehen ist, erstreckt sich der Rand der Kavität um den Außenrand eines solchen zweiten Materials bzw. Materialstücks herum, d.h. (bei dieser Abwandlung von Figur 7) um das schraffierte rechteckige Gebiet herum. Solch ein zusätzliches, zweites Material oder Materialstück kann auch bei allen übrigen Ausführungsformen vorgesehen sein.

Figur 8 zeigt einen Stoßsensor 10 mit einem Schichtverbund 20, der zwischen der ersten 1 und der zweiten Folie 2 eine Mehrzahl separater Kavitäten 4, 4', 4" aufweist, die voneinander in lateraler Richtung getrennt sind. Wenngleich diese Kavitäten in Figur 8 nur durch schmale Linien getrennt dargestellt sind, befinden sich zwischen ihnen hinreichend breite Materialstreifen der Schicht 1, 2 und/oder 11 , um alle Kavitäten und deren Flüssigkeitsmengen voneinander zu trennen. In dem jeweiligen ersten Teilvolumen 4a der jeweiligen Kavität befindet sich jeweils eine Flüssigkeitsmenge 5, 5', 5" und in dem jeweiligen zweiten Teilvolumen 4b, d.h. dem restlichen Kavitätsvolumen außerhalb der (innersten) Haltestruktur 6, befindet sich jeweils ein Materialstück 13 oder eine sonstige Applikationsform des Nachweismaterials 12, insbesondere Füll- oder Indikatormaterials 12a; 12b.

Gemäß Figur 8 ist vorgesehen, dass der Stoßsensor 10 eine Mehrzahl unabhängig voneinander sensitiver Einzelsensoren 24a, 24b, 24c innerhalb des Schichtverbunds 11 enthält. Eine bevorzugte Ausführungsform von Figur 8 sieht vor, dass jeder der Einzelsensoren auf äußere Stöße oder Beschleunigungen unterschiedlich reagiert. Insbesondere kann vorgesehen sein, dass jeder der Einzelsensoren 24a, 24b, 24c einen unterschiedlich hohen Grenzbereich oder Grenzwert, insbesondere Mindestgrenzwert hinsichtlich der Mindeststärke nachweisbarer Stöße oder Beschleunigungen besitzt. Dadurch ist die Stärke aufgetretener Stöße eingrenzbar, indem erfasst wird, ob alle, keine oder nur einer oder einige der Einzelsensoren 24a, 24b, 24c einen aufgetretenen Stoß anzeigen (vorzugsweise richtungsabhängig). Die Mehrzahl von Einzelsensoren 24a, 24b, 24c in dem Schichtverbund 20 kann beispielsweise so angeordnet sein, dass ein erster, beispielsweise der in Figur 8 oben dargestellte Einzelsensor 24a, den niedrigsten Grenzwert oder Grenzbereich für die Mindeststärke nachweisbarer Stöße oder Beschleunigungen besitzt, während der jeweilige Grenzwert oder Grenzwertbereich bei jedem nachfolgend angeordneten weiteren Einzelsensor 24b, 24c jeweils höher ist, beispielsweise um einen bestimmten Betrag größer ist. Je stärker ein Stoß ist, desto mehr Einzelsensoren reagieren auf den Stoß und zeigen ihn an. Im Falle eines visuellen Nachweises, der z.B. mit einem Ausbluten von Farbstoff oder einem Farbumschlag im Bereich des Materials 12 oder der damit in Kontakt getretenen Flüssigkeit realisierbar ist, lassen sich die Substanzen der Materialien 12 und/oder der jeweiligen Flüssigkeiten 5, 5', 5" auch unterschiedlich wählen, beispielsweise so, dass der Einzelsensor 24a einen Farbumschlag nach Grün für noch vertretbare, relativ geringe Stoßstärken herbeiführt, wohingegen ein weiterer Sensor 24c mit deutlich höherem Schwell- oder Grenzwert einen Farbumschlag nach Rot herbeiführt, wenn er reagiert. Zusätzlich kann mindestens noch ein Sensor 24b vorgesehen sein, dessen Nachweisempfindlichkeit kleiner ist als diejenige des Sensors 24a, aber größer als diejenige des Sensors 24c und der auf Stöße oberhalb einer mittleren, gerade noch unkritischen Stärke reagiert und diese mit einem Farbumschlag nach Gelb oder Orange anzeigt. Eine beliebige Anordnung von zwei, drei oder noch mehr Einzelsensoren 24 kann so etwa ähnlich einer Ampel einen visuellen Eindruck von der Wahrscheinlichkeit einer Beschädigung eines mit dem Stoßetikett 10 etikettierten Gegenstandes oder Pakets vermitteln, der auch für einen unkundigen Laien unmittelbar verständlich ist, der den Aufbau und das spezifische Auslöseverhalten der jeweiligen Einzelsensoren 24 nicht näher kennt. In Figur 8 sind die vom Einzelsensor 24a bis zum Einzelsensor 24c zunehmend höheren Schwell- bzw. Grenzwerte für die spezifische Mindeststärke, oberhalb derer der jeweilige Sensor 24a, 24b, 24c einen aufgetretenen Stoß anzeigen kann, durch unterschiedlich dünne Pfeile dargestellt, wobei der ganz unten dargestellte, mit dem dünnsten Pfeil versehene Einzelsensor 24c Pfeil die geringste Auslösewahrscheinlichkeit bzw. Sensitivität besitzt.

Der Gesamtsensor mit bei unterschiedlich hohen Grenzstärken ansprechenden Einzelsensoren ist beispielsweise dadurch realisierbar, dass die Haltestrukturen 6 der jeweiligen Kavitäten 4, 4', 4" unterschiedlich groß, unterschiedlich hoch, unterschiedlich tief, unterschiedlich breit oder in sonstiger Weise als unterschiedlich starke, aber überwindbare Barrieren für die jeweilige Flüssigkeitsmenge ausgebildet sind. Alternativ oder in Kombination damit ist dies auch dadurch realisierbar, dass in den jeweiligen Kavitäten 4, 4', 4" jeweils unterschiedliche oder unterschiedlich zusammengesetzte Flüssigkeiten 5, 5', 5" vorgesehen sind. Es kann sich beispielsweise um Flüssigkeiten handeln, die jeweils eine unterschiedlich starke Oberflächenspannung, Benetzungsfähigkeit, Adhäsionskraft, Dichte und/oder Viskosität besitzen. Durch solche Ausführungsformen ist erreichbar, dass die jeweilige Haltestruktur 6 oder Mehrzahl von Haltestrukturen durch den jeweiligen Flüssigkeitstropfen 5; 5'; 5" überquert wird, wenn eine Beschleunigung oder ein Stoß auftritt, deren bzw. dessen Stärke höher ist als der Schwell- oder Grenzwert, auf den der jeweilige Einzelsensor 24a; 24b; 24c abgestimmt ist.

Die anhand von Figur 8 gezeigte Abwandlungsmöglichkeit, anstelle nur eines einzigen Einzelsensors eine Mehrzahl von ihnen vorzusehen, und/oder die Abwandlung dahingehend, mehrere von ihnen mit unterschiedlicher Grenzwertstärke gemeinsam innerhalb desselben Schichtverbunds 20 auszubilden, ist mit jeder der übrigen Ausführungsformen dieser Anmeldung kombinierbar. Die sich ergebenden Merkmalskombinationen sind ebenfalls dahingehend abwandelbar, dass die Richtung solcher Einzelsensoren, ggfs. auch mit mehreren Materialstücken 12 pro Einzelsensor, für einige oder alle Einzelsensoren unterschiedlich gewählt werden kann. Während bei herkömmlichen Beschleunigungssensoren auch oft aufwändige Röhrensysteme oder Behältergeometrien erforderlich sind, lassen sich gemäß der vorliegenden Anmeldung mit einem oder einigen wenigen Stoßsensoren 10 oder damit ausgestatten Etiketten 30 Stöße in beliebigen Richtungen und/oder in beliebiger Stärke nachweisen, beispielsweise nahe einer Ecke oder Kante eines Pakets, einer Verpackung oder eines sonstigen Gegenstandes. Hierzu genügt es, auf lediglich zwei benachbarte, um etwa 90° zueinander orientierten Außenflächen eines Gegenstandes oder Pakets jeweils einen Stoßsensor aufzukleben, beispielsweise auf zwei Flächen nahe der Mitte der Kante zwischen ihnen. Wenngleich in den Figuren die Ausführungsformen des Stoßsensors 10 meist zugleich auch als Etikett 30 gekennzeichnet sind, braucht der jeweilige Stoßsensor 10 dennoch nicht als Etikett ausgebildet zu sein; jede andere Realisierungsform, die einen solchen Schichtverbund aus zumindest zwei Folien 1, 2 enthält, ist ebenso denkbar.

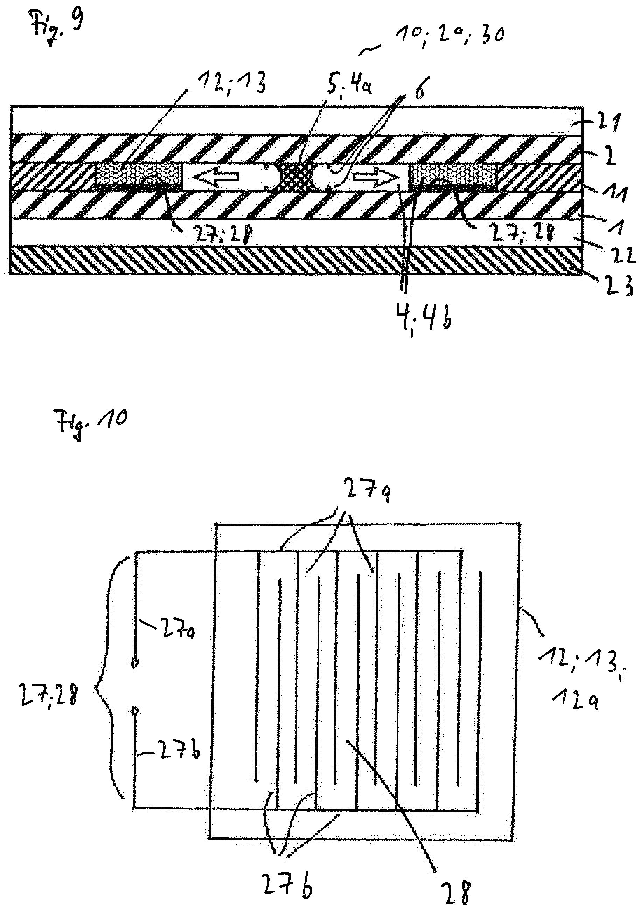

Figur 9 zeigt ein Ausführungsbeispiel, das eine elektrische (statt optische bzw. visuelle) Anzeige eines stoß- bzw. beschleunigungsbedingten Flüssigkeitsaustritts ermöglicht. Jedes Materialstück 12; 13 grenzt an eine entsprechende Elektrode 27 oder Elektrodenanordnung an oder ist jedenfalls in ihrer Nähe angeordnet, um beim Kontakt mit der Flüssigkeit 5 die Flüssigkeit im Bereich der Elektrode zu halten. Die Elektrode 27 kann beispielsweise auf eine der Folien 1 aufgedruckt oder in sonstiger Weise befestigt oder angeordnet sein, beispielsweise als Interdigitalstruktur 28 aus zwei einzelnen Elektroden 27a, 27b, wie in der schematischen Draufsicht in Figur 10 dargestellt ist. Im Bereich eines jeweiligen Materialstücks 12 führt daher eine elektrische Messung zu einer Veränderung der Kapazität und/oder des elektrischen Widerstands zwischen beiden einzelnen Elektroden 27a, 27b der jeweiligen Gesamtelektrode 27 bzw. Interdigitalstruktur 28. Für jedes Materialstück 13 aus Figur 9 kann eine eigene Interdigitalstruktur 28 oder Elektrodenanordnung aus zumindest zwei Einzelelektroden, beispielsweise gemäß Figur 10 vorgesehen sein. Ferner lassen sich die Elektrodenanschlüsse einiger oder aller Elektrodenpaare, beispielsweise nur die ersten Einzelelektroden 27a aller seitlichen Ausbuchtungen bzw. Materialstücke 13, an denselben Anschluss und somit an dasselbe Potenzial anschließen.

Bei allen Ausführungsformen der Anmeldung kann eine solche elektrische Messung anstelle eines optischen Nachweises durch Indikatormaterialien erfolgen. Während beim optischen Nachweis zumindest die äußere der beiden Folien 1 oder 2 - sei es farbig oder farblos - zumindest durchsichtig oder jedenfalls transluzent, d.h. durchscheinend sein sollte und optionale Beschriftungsschichten 21 ggfs. mit Fenstern oder Aussparungen versehen sein sollten, kann im Falle einer elektrischen Messung die Oberseite des Stoßsensors intransparent sein. Die Beschleunigungssensoren aller Ausführungsformen lassen sich daher auch mit Hilfe von undurchsichtigen Folien als Folien 1, 2 oder mit sonstigen undurchsichtigen Einzelschichten des Schichtverbunds realisieren; insbesondere auch auf beiden Seiten der Kavität 4.

Als Elektroden 27a, 27b können Leiterbahnen dienen, die beispielsweise gedruckt, gestanzt, geätzt oder in sonstiger Weise auf und/oder in das Material der jeweiligen Folie 1; 2 (bzw. der an der Kavität 4 angrenzenden Grenzschicht) aufgebracht bzw. eingebracht sind. Die Leiterbahnen können beispielsweise aus Kupfer, Silber, Gold, Aluminium oder einem sonstigen Metall oder einer Metalllegierung, aus Kohlenstoff, alternativ beispielsweise aus Indium, Germanium oder aus einem leitfähigen Polymer oder leitfähigen Klebstoff gebildet sein. Die Leiterbahnen bzw. Leiterbahnpaare können ferner eine RFID-Antenne und/oder eine elektronische Auswerteeinheit umfassen; sie können an solch eine Antenne oder Auswerteeinheit angeschlossen sein oder selbst einen Bestandteil einer Antenne und/oder Auswerteeinheit bilden. Die Auswerteeinheit ermöglicht Messungen von Veränderungen der Leitfähigkeit, des Widerstandes, der Kapazität oder einer sonstigen elektrischen Eigenschaft nach einem direkten oder indirekten Kontakt mit der Flüssigkeit 5. Beispielsweise ist bei einer kapazitiven Messung die Veränderung der Kapazität einer Leiterbahn nachweisbar, die entsteht, wenn die Flüssigkeit sich der Leiterbahn nähert, die Leiterbahn umgibt und/oder die isolierende Ummantelung bzw. Isolationsschicht der Leiterbahn berührt (indirekter Kontakt mit dem Leiter ohne Kurzschluss). Mit Hilfe der Antenne, insbesondere einer RFID-Antenne, ist eine passive Messung, Speicherung und/oder Übertragung des Messergebnisses ohne eigene Strom- oder Spannungsquelle möglich.
Die Stoßsensoren sämtlicher Ausführungsformen können ferner als kombinierte Sensoren oder Indikatoren gestaltet sein, die auch weitere Einflüsse oder Ereignisse erfassen und/oder anzeigen können. Sie können beispielsweise zugleich auch als Druckausgleichssensor, als Indikator eines zeitlichen Temperaturverlaufs, zur Messung einer Bestrahlung oder Strahlungsdosis beispielsweise von Licht, von UV-Strahlung oder von radioaktiver Strahlung, oder als Gefrier-Indikator oder sonstiger Temperatur- oder Temperaturverlaufs-Indikator ausgebildet sein. Stoßsensoren aller Ausführungsformen können zudem derartige Zusatzfunktionen erfüllen und zugleich als Etikett ausgebildet sein, beispielsweise als Druckausgleichsetikett oder Etikett zum Überwachen eines Temperaturverlaufs, einer Über- oder Unterschreitung einer Grenztemperatur oder einer Strahlungsdosis.

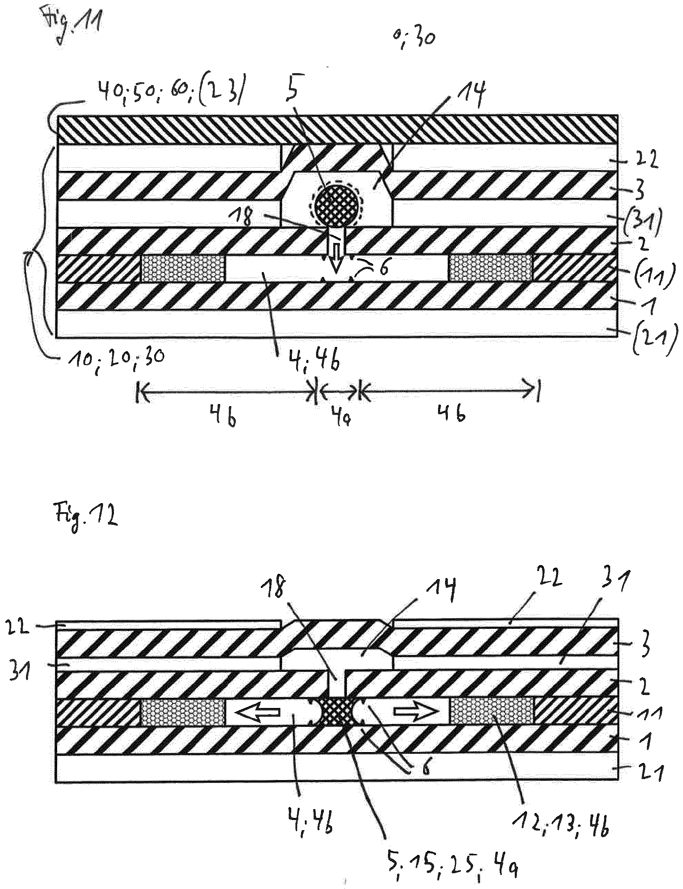

Die Figuren 11 und 12 zeigen exemplarisch ein Ausführungsbeispiel eines Stoßsensors 10, dessen Schichtverbund 20 so ausgebildet ist, dass der Stoßsensor nicht von Beginn an sensitiv für Stöße ist, sondern erst nach dem Aktivieren, d.h. Sensitiv-Machen bzw. Sensibilisieren des Sensors, etwa durch einen manuellen oder automatischen Eingriff, beispielsweise automatisch durch den Vorgang des Aufspendens selbst. Der Schichtverbund 20 weist außer der Kavität 4 noch eine weitere Kavität 14 auf, die durch eine Durchtrittsöffnung 18, beispielsweise in der zweiten Folie 2, mit der Kavität 4 zwischen den Folien 1, 2 verbunden oder verbindbar ist. Bei dieser Ausführungsform befindet sich die Flüssigkeit 5 im fabrikneuen, ursprünglichen Zustand des Sensors 10, Schichtverbunds 20 und/oder Etiketts 30 nicht in der Kavität 4, sondern in der weiteren Kavität 14 und muss von dort erst in die Kavität 4 gedrückt oder befördert werden, um den Sensor für auftretende Stöße sensitiv zu machen. Dies kann beispielsweise manuell von Hand, automatisch und insbesondere durch das Aufspenden des Etiketts 30 auf einen Gegenstand 60 geschehen, beispielsweise auf ein Paket oder eine Verpackung 40, 50, welche an derjenigen Seite den Schichtverbund 20 berührt, wo zuvor die ablösbare Trägerfolie 23 angeordnet war.

Um automatisch durch den Vorgang des Aufspendens bzw. Aufklebens des Etiketts die Flüssigkeitsmenge aus der weiteren Kavität 14 heraus und in die Kavität 4 hinein zu befördern, kann der Schichtverbund 20 bereichsweise komprimierbar sein. In der Umgebung der weiteren Kavität 14 ist beispielsweise eine dritte Folie 3 angeordnet, die gemeinsam mit der zweiten Folie 2 die weitere Kavität 14 umschließt. Zusätzlich kann optional eine weitere Zwischenschicht 31 vorgesehen sein. Als Außenschichten können schließlich noch eine Klebstoffschicht 22 und/oder (auf der Gegenseite) eine Beschriftungsschicht 21 bzw. Dekorschicht vorgesehen sein. Es können wahlweise eine, einige oder alle der Schichten 31, 3 und/oder 22 in Richtung ihrer Schichtdicke komprimierbar sein; eine oder einige von ihnen können Schaumschichten sein. In Figur 11 ist die dritte Folie 3 um die weitere Kavität 14 herum gewölbt und kann im Bereich der weiteren Kavität 14 deformiert, insbesondere in Richtung der Schichtdicke gestaucht werden. Somit kann die dritte Folie 3 oder eine sonstige Schicht, auch wenn sie nicht aus komprimierbaren, porösem oder schaumförmigem Material, sondern aus einem Volumenmaterial besteht,, dadurch "komprimierbar" oder stauchbar sein, dass sie sich, wie in Figur 11 exemplarisch dargestellt, um die weitere Kavität 14 erstreckt und dort in Richtung weg von der weiteren Kavität 14 emporgewölbt ist, beispielsweise in Folge eines Prägevorgangs. Die der zweiten Folie 2 zugewandte Hauptfläche der dritten Folie 3 ist daher vertieft, und zwar in Richtung weg von der zweiten Folie 2. Die Höhe der weiteren Kavität 14 ist dadurch größer als der umgebende Abstand zwischen beiden Folien 2, 3 bzw. als die Schichtdicke einer optionalen weiteren Zwischenschicht 31. Die weitere Kavität 14 ist auch ohne eine solche Zwischenschicht 31 herstellbar, etwa durch einen Prägevorgang.

Vorzugsweise beim Aufspenden des Etiketts, vorher oder nachher wird die weitere Kavität 14 zusammengedrückt, wodurch die Flüssigkeit zumindest teilweise aus der weiteren Kavität 14 austritt; durch die Durchtrittsöffnung 18 gelangt sie in die eigentliche, zur Beschleunigungsmessung dienende Kavität 4, wo sie durch eine oder mehrere Haltestrukturen 6, die wahlweise auf einer oder auf beiden Folien 1, 2 angeordnet sind, in Position gehalten wird, d.h. in lateraler Richtung (parallel zu den Hauptflächen der Folien) festgehalten wird. Erst in diesem Zustand ist der Stoßsensor 10 sensitiv für Stöße, jedenfalls für Stoßkomponenten in Richtung parallel zur Hauptebene des Schichtverbunds 20. Das erste Teilvolumen 4a, welches an der Oberfläche der ersten und/oder zweiten Folie 1; 2 durch die Haltestruktur 6 oder durch die innerste Haltestruktur 6 einer Anordnung mehrerer Haltestrukturen 6 umlaufen wird und somit vordefiniert wird, dient (wie bei den übrigen Ausführungsformen) zur Unterbringung und Positionierung der Flüssigkeit im Kontakt mit beiden Folien 1 und 2, solange der Stoßsensor 10 für Stöße oder sonstige Beschleunigungen vorbestimmter Mindeststärke sensitiv ist. Der sensitive Zustand liegt bei den übrigen Ausführungsformen von Anfang an vor, d.h. mit Herstellung des Etiketts 30 oder des sonstigen Stoßsensors 10; in Figur 11 hingegen erst mit dem Sensitivmachen des Sensors durch Übertragen der Flüssigkeit 5 von der weiteren Kavität 14 in die Kavität 4 (bzw. in deren erstes Teilvolumen 4a innerhalb der Haltestruktur 6 oder innerhalb der innersten Haltestruktur 6 einer Mehrzahl von Haltestrukturen 6). Der sensitive Zustand endet, sobald ein Stoß ausreichender Stärke auftritt, der die Flüssigkeit aus dem ersten Teilvolumen 4a in das zweite Teilvolumen 4b bis zum Nachweismaterial 12 beschleunigt, wo das Auftreffen der Flüssigkeit durch den Sensor 10 visuell, elektrisch oder auf sonstige Weise dauerhaft angezeigt wird.

Figur 12 zeigt das Etikett 30 bzw. den Stoßsensor 10 aus Figur 11 in diesem sensitivem Zustand, d.h. unmittelbar nach dem Übertragen der Flüssigkeit 5 von der weiteren Kavität 14 in das erste Teilvolumen 4a der Kavität 4. Die Emporwölbung der dritten Folie 3 wurde durch Zusammendrücken des Schichtverbunds 20, beispielsweise durch das Aufkleben und Aufdrücken der Klebstoffschicht 22 beim Aufspenden verringert und dadurch die weitere Kavität 14 durch die Durchtrittsöffnung 18 hindurch zumindest teilweise entleert.

Im Auslieferungszustand gemäß Figur 11 kann die weitere Kavität 14 wahlweise vollständig oder teilweise mit der Flüssigkeit 5 gefüllt sein. Gemäß einer Weiterbildung kann der Tropfen 15 oder anderweitige Flüssigkeitsvorrat 25, solange er sich in der weiteren Kavität 14 befindet, gekapselt, d.h. von einer Kapsel oder sonstigen Umhüllung aus einer zerstörbaren Folie, aus Gelatine, aus Wachs oder aus einem sonstigen organischen oder anorganischen Umhüllungsmaterial umgeben sein. Durch eine solche Hülle oder Kapsel kann der Tropfen insbesondere direkt an der Durchtrittsöffnung 18 der angrenzenden Folie - hier die Folie 2 - befestigt sein. Die weitere Kavität 14 oder jedenfalls die Hülle oder die Kapsel, die in Figur 11 gestrichelt um die Flüssigkeit 5 herum angedeutet ist, dient als Reservoir vor dem Aktivieren des Sensors und erleichtert auch die zuverlässige, ggfs. vollständige Beförderung der Flüssigkeitsmenge in die Durchtrittsöffnung 18 und in das erste Teilvolumen 4a der Kavität hinein4. Nach dem Sensitivmachen des Sensors ist nicht nur das erste Teilvolumen 4a, sondern oft auch noch die Durchtrittsöffnung 18 noch mit Flüssigkeit gefüllt, obwohl in Figur 12 anders dargestellt.

Sämtliche in dieser Anmeldung beschriebenen Ausführungsformen sind mit Hilfe einfachster Kaschier-, Druck- und Stanztechniken, etwa solchen im Rahmen der Etikettenherstellung realisierbar, wodurch Stoßsensoren einfachster Bauweise und geringster Fertigungskosten herstellbar sind. Sie können zudem mehrere Einzelsensoren mit abgestuftem, unterschiedlich stark sensitivem Auslöseverhalten und/oder einen oder mehrere Sensoren mit richtungsabhängiger Stoßdetektion enthalten, sogar innerhalb der Grundfläche eines gemeinsamen, ununterbrochenen Schichtverbunds. Richtung und Stärke eines äußeren Stoßes oder einer sonstigen Beschleunigung, einschließlich negativer Beschleunigungen, d.h. Abbremsvorgängen, sind so nachweisbar. Der Stoßsensor kann beispielsweise als Schüttelsensor, Schocksensor oder Lagesensor zur qualitativen und/oder quantitativen Messung oder als reiner Stoß-, Schock-, Lage- oder Schüttelindikator zur bloßen Anzeige, d.h. zur bloßen Indikation des Auftretens einer solchen Einwirkung ausgebildet sein. Beim Versand verpackter Gegenstände können Stöße insbesondere selektiv - oder mit selektiv erhöhter Messgenauigkeit - entlang bestimmter Vorzugsrichtungen gemessen werden, beispielsweise entlang solcher Richtungen, in denen die Stoßempfindlichkeit des transportierten Gegenstands besonders hoch oder der Gegenstand im Falle auftretender Beschleunigungen besonders beschädigungsanfällig ist.

Die Haltestrukturen 6 können beispielsweise Haltestege oder sonstige in sich geschlossene und/oder linienförmige Erhebungen, Aufdrucke oder Vertiefungen sein, etwa Ritz-, Präge-, Anstanz- oder Laserstrukturlinien. Mit der mindestens einen Haltestruktur lässt sich ein folienbasierter, im Wesentlichen als Schichtverbund gebildeter Stoßsensor realisieren, bei dem - anders als bei herkömmlichen Stoßsensoren - die Flüssigkeitsmenge im Kontakt mit zwei voneinander beabstandeten Folien 1, 2 oder sonstigen Schichten oder Oberflächen, die vorzugsweise parallel zueinander und einander zugewandt sind, gehalten wird. Durch die Haltestrukturen 6 wird die Flüssigkeit in lateraler Richtung, d.h. in seitlichen Richtungen parallel zu den Folienflächen oder anderweitigen, einander zugewandten Hauptflächen, fixiert, zumindest solange kein Stoß oberhalb der Grenzstärke auftritt, der bewirkt, dass die Flüssigkeit die Haltestruktur 6 überquert und das durch die Haltestruktur 6 umgebene erste Teilvolumen 4a verlässt. Zudem sind Stoßsensoren realisierbar, bei denen nach dem Durchtritt durch eine Durchtrittsöffnung 18 einer Folie 2 und Berühren einer weiteren, gegenüberliegenden Folie 1 durch die Flüssigkeit (vergleiche etwa Figur 11 oder 12) diese Flüssigkeit nicht automatisch ein Auslösevorgang hervorruft, sondern der Sensor lediglich in einen sensitiven Zustand versetzt wird, in dem er zum Anzeigen eines später auftretenden Stoßes vorbereitet ist.

### Bezugszeichenliste

- 1: erste Folie
- 2: zweite Folie
- 3: dritte Folie
- 4; 4'; 4": Kavität
- 4a: erstes Teilvolumen
- 4b: zweites Teilvolumen
- 5; 5'; 5": Flüssigkeit
- 6: Haltestruktur
- 6a: Erhebung
- 6b: Vertiefung
- 7: Linienquerschnitt
- 8: Unebenheit
- 9: Beschichtung
- 10: Stoßsensor
- 11: Zwischenschicht
- 12; 12'; 12": Material
- 12a: Füllmaterial
- 12b: Indikatormaterial
- 13; 13'; 13": Materialstück
- 14: weitere Kavität
- 15: Tropfen
- 16: Ausbuchtung
- 17: Führungsstruktur
- 18: Durchtrittsöffnung
- 19: Kapillarstruktur
- 20: Schichtverbund
- 21: Beschriftungsschicht
- 22: Klebstoffschicht
- 23: Trägerschicht
- 24a, 24b, 24c: Einzelsensor
- 25: Flüssigkeitsvorrat
- 26: Einbuchtung
- 27; 27a; 27b: Elektrode
- 28: Interdigitalstruktur
- 30: Etikett
- 31: weitere Zwischenschicht
- 40: Paket
- 50: Verpackung
- 60: Gegenstand
- x: erste seitliche Richtung
- y: zweite seitliche Richtung
- z: vertikale Richtung

## Patentansprüche

1. Stoßsensor (10) zum Nachweis eines Stoßes oder einer sonstigen Beschleunigung, wobei der Stoßsensor (10) eine Flüssigkeit (5) in Form eines Tropfens (15) oder eines sonstigen Flüssigkeitsvorrats (25) enthält und so aufgebaut ist, dass die Position und/oder Verteilung der Flüssigkeit (5) in dem Stoßsensor (10) anzeigt, ob der Stoßsensor (10) einem Stoß oder einer sonstigen Beschleunigung einer vorbestimmten Mindeststärke ausgesetzt worden ist,
wobei der Stoßsensor (10) einen Schichtverbund (20) aufweist, der zumindest Folgendes umfasst:
- eine erste Folie (1),
- eine zweite Folie (2),
- zumindest eine zwischen einer Folienfläche der ersten Folie (1) und einer Folienfläche der zweiten Folie (2) angeordnete Kavität (4), Aussparung oder sonstige Ausnehmung und
- mindestens eine Haltestruktur (6), die an der Folienfläche der ersten und/oder zweiten Folie (1; 2) angeordnet ist,
- wobei die mindestens eine Haltestruktur (6) dazu ausgelegt ist, die Flüssigkeit (5) in einem vorbestimmten ersten Teilvolumen (4a) der Kavität (4) im Kontakt mit beiden Folien (1; 2) zu halten, solange der Stoßsensor (10) für Stöße oder sonstige Beschleunigungen vorbestimmter Mindeststärke sensitiv ist, und ferner dazu ausgelegt ist, ein Austreten der Flüssigkeit (5) oder eines Teils der Flüssigkeit (5) aus dem ersten Teilvolumen (4a) in ein zweites Teilvolumen (4b) der Kavität (4), das zum Auffangen der Flüssigkeit (5) dient, erst im Falle eines Stoßes oder einer sonstigen Beschleunigung oberhalb der vorbestimmten Mindeststärke zu ermöglichen, derart, dass
- die mindestens eine Haltestruktur (6) ein Bereich der ersten und/oder zweiten Folie (1; 2) ist, der als lokale Erhebung (6a), Vertiefung (6b) oder sonstige lokale Unebenheit (8) der Folienfläche ausgebildet ist, wobei die lokale Erhebung (6a), Vertiefung (6b) oder sonstige Unebenheit (8)
- eine überwindbare Barriere für die Benetzung und/oder Berührung der ersten und/oder zweiten Folie (1; 2) durch die Flüssigkeit (5) bildet und
- ein Flächenstück der Folienfläche der ersten und/oder zweiten Folie (1; 2) umgrenzt, welches dem ersten Teilvolumen (4a) entspricht.

2. Stoßsensor nach Anspruch 1,
**dadurch gekennzeichnet, dass** die mindestens eine Haltestruktur (6) eine eingestanzte, eingeprägte, eingeritzte, aufgedruckte, aufgeklebte oder in sonstiger Weise geformte lokale Unebenheit (8) oder Beschichtung (9) umfasst, die auf einer an die Kavität (4) angrenzenden Hauptfläche der ersten (1) und/oder zweiten Folie (2) angeordnet ist.

3. Stoßsensor nach Anspruch 1 oder 2,
**dadurch gekennzeichnet, dass** die Erhebung (6a), Vertiefung (6b) oder sonstige lokale Unebenheit (8) auf der Folienfläche der ersten und/oder zweiten Folie (1; 2) als kreisförmige, ringförmige oder sonstige in sich geschlossene Linie verläuft.

4. Stoßsensor nach einem der Ansprüche 1 bis 3,
**dadurch gekennzeichnet, dass** das mindestens eine Halteelement (6) ein erstes Halteelement der ersten Folie (1) und ein zweites Halteelement der zweiten Folie (2) umfasst.

5. Stoßsensor nach einem der Ansprüche 1 bis 4,
**dadurch gekennzeichnet, dass** der Stoßsensor (10) in mindestens einem Bereich des zweiten Teilvolumens (4b), der von dem ersten Teilvolumen (4a) und/oder von der mindestens einen Haltestruktur (6) beabstandet ist, ein Material (12) aufweist, das einen Nachweis des Austritts der Flüssigkeit (5) aus dem ersten Teilvolumen (4a) ermöglicht, indem es beim Kontakt mit der Flüssigkeit (5) die Flüssigkeit (5) aufsaugt, festhält oder bindet, sich zumindest teilweise in der Flüssigkeit löst und/oder eine chemische oder sonstige, visuell beobachtbare oder messbare Reaktion mit der Flüssigkeit (5) eingeht.

6. Stoßsensor nach einem der Ansprüche 1 bis 5,
**dadurch gekennzeichnet, dass** der Stoßsensor (10) in mindestens einem Bereich des zweiten Teilvolumens (4b), der von dem ersten Teilvolumen (4a) und/oder von der mindestens einen Haltestruktur (6) beabstandet ist, eine Elektrode (27), eine Interdigitalstruktur (28) aus mehreren Elektroden und/oder eine sonstige Elektrodenanordnung aufweist, durch die bei Kontakt mit Flüssigkeit (5) oder bei Herannahen von Flüssigkeit (5) eine Änderung der Kapazität, des elektrischen Widerstandes oder einer anderen elektrischen Eigenschaft messbar ist.

7. Stoßsensor nach einem der Ansprüche 1 bis 6,
**dadurch gekennzeichnet, dass** der Stoßsensor (10) in einer Mehrzahl von Bereichen des zweiten Teilvolumens (4b), die in unterschiedlichen Richtungen von dem ersten Teilvolumen (4a) beabstandet sind, ein Material (12) aufweist, das beim Kontakt mit der Flüssigkeit (5) die Flüssigkeit (5) aufsaugt, festhält oder bindet, sich zumindest teilweise in der Flüssigkeit löst und/oder eine chemische oder sonstige, visuell beobachtbare oder messbare Reaktion mit der Flüssigkeit (5) eingeht.

8. Stoßsensor nach einem der Ansprüche 5 bis 7,
**dadurch gekennzeichnet, dass** die mindestens eine Haltestruktur (6) und/oder das durch die Haltestruktur (9) vordefinierte erste Teilvolumen (4a) in der Mitte oder im Zentrum der seitlichen Erstreckung der Kavität (4) angeordnet ist und dass die Kavität (4) eine Mehrzahl seitlicher Ausbuchtungen (16), Taschen oder anderweitiger Aufweitungen oder Ausläufer aufweist, die in jeweils unterschiedlichen Richtungen symmetrisch um die mindestens eine Haltestruktur (6) und/oder um das erste Teilvolumen (4a) herum verteilt angeordnet sind und in denen jeweils voneinander getrennte Materialstücke (13) oder sonstige separate Bereiche des Materials (12) angeordnet sind.

9. Stoßsensor nach einem der Ansprüche 5 bis 8,
**dadurch gekennzeichnet, dass** der Stoßsensor (10) in dem zweiten Teilvolumen (4b) der Kavität (4) auf der angrenzenden Hauptfläche der ersten (1) und/oder zweiten Folie (2) mindestens eine Führungsstruktur (17) aufweist, die von der mindestens einen Haltestruktur (6) beabstandet ist, sich seitlich bis zu einem mit dem Material (12) versehenen Bereich des zweiten Teilvolumens (4b) der Kavität (4) erstreckt und beim stoßbedingten Austritt der Flüssigkeit (5) aus dem ersten Teilvolumen (4a) die Flüssigkeit (5) in Richtung des Materials (12) und/oder bis zu dem Material (12) leitet.

10. Stoßsensor nach einem der Ansprüche 5 bis 9,
**dadurch gekennzeichnet, dass** das Material (12) ein poröses, schaumförmiges, aufquellbares oder in anderer Weise saugfähiges Füllmaterial (12a) ist, das beim Kontakt mit der Flüssigkeit (5) die Flüssigkeit (5) dauerhaft bindet.

11. Stoßsensor nach einem der Ansprüche 5 bis 9,
**dadurch gekennzeichnet, dass** das Material (12) ein Indikatormaterial (12b) ist, das beim Kontakt mit der Flüssigkeit (5) chemisch oder auf sonstige, visuell beobachtbare und/oder messbare Weise mit der Flüssigkeit (5) oder darin enthaltenen Stoffen reagiert.

12. Stoßsensor nach einem der Ansprüche 1 bis 11,
**dadurch gekennzeichnet, dass** der Schichtverbund (20) des Stoßsensors (10) auf einer Seite der zweiten Folie (2), die von der ersten Folie (1) abgewandt ist, zumindest noch Folgendes aufweist:
- eine dritte Folie (3) und
- eine zwischen der zweiten Folie (2) und der dritten Folie (3) angeordnete weitere Kavität (14), Aussparung oder sonstige Ausnehmung, die zur Unterbringung der Flüssigkeit (5) vor Ingebrauchnahme des Stoßsensors (10) dient,
wobei die weitere Kavität (14) über eine Durchtrittsöffnung (18) in der zweiten Folie (2) mit der Kavität (4) zwischen der ersten (1) und der zweiten Folie (2) verbunden ist und
wobei der Schichtverbund (20) im Bereich der Durchtrittsöffnung (18) in der Weise zusammendrückbar und/oder verformbar ist, dass die Flüssigkeit (5) zumindest teilweise aus der weiteren Kavität (14) in das erste Teilvolumen (4a) der Kavität (4) zwischen der ersten (1) und der zweiten Folie (2) befördert wird, um den Stoßsensor (10) für Stöße oder sonstige Beschleunigungen vorbestimmter Mindeststärke sensitiv zu machen.

13. Stoßsensor nach einem der Ansprüche 5 bis 12,
**dadurch gekennzeichnet, dass** der Schichtverbund (20) des Stoßsensors (10) zwischen der ersten Folie (1) und der zweiten Folie (2) eine Mehrzahl separater Kavitäten (4; 4'; 4"), Aussparungen oder sonstiger Ausnehmungen aufweist, die voneinander getrennt sind und jeweils zumindest Folgendes enthalten:
- ein jeweiliges erstes Teilvolumen (4a), das mit einer jeweiligen Menge an Flüssigkeit (5; 5'; 5") gefüllt oder füllbar ist,
- ein jeweiliges zweites Teilvolumen (4b), das mit einem jeweiligen Materialstück (13, 13', 13") oder Bereich eines Materials (12) versehen ist, welches beim Kontakt mit der Flüssigkeit (5) die Flüssigkeit (5) aufsaugt, festhält oder bindet, sich zumindest teilweise in der Flüssigkeit (5) löst und/oder eine chemische oder sonstige, visuell beobachtbare oder messbare Reaktion mit der Flüssigkeit (5) eingeht, und
- mindestens eine jeweilige Haltestruktur (6), die das jeweilige erste Teilvolumen (4a) umgrenzt und/oder umgibt,
wobei die Haltestrukturen (6) der jeweiligen Kavitäten (4; 4'; 4") als unterschiedlich große, unterschiedlich hohe, unterschiedlich tiefe, unterschiedlich breite und/oder in sonstiger Weise unterschiedlich starke, aber überwindbare Barrieren gegen eine Fortbewegung der Flüssigkeits (5) parallel zur Hauptfläche der ersten und/oder zweiten Folie (1, 2) ausgebildet sind.

14. Stoßsensor nach einem der Ansprüche 5 bis 13,
**dadurch gekennzeichnet, dass** der Schichtverbund (20) des Stoßsensors (10) zwischen der ersten Folie (1) und der zweiten Folie (2) eine Mehrzahl separater Kavitäten (4; 4'; 4"), Aussparungen oder sonstiger Ausnehmungen aufweist, die voneinander getrennt sind und jeweils zumindest Folgendes enthalten:
- ein jeweiliges erstes Teilvolumen (4a), das mit einer jeweiligen Menge an Flüssigkeit (5; 5'; 5") gefüllt oder füllbar ist,
- ein jeweiliges zweites Teilvolumen (4b), das mit einem jeweiligen Materialstück (13, 13', 13") oder Bereich eines Materials (12) versehen ist, welches beim Kontakt mit der Flüssigkeit (5) die Flüssigkeit (5) aufsaugt, festhält oder bindet, sich zumindest teilweise in der Flüssigkeit (5) löst und/oder eine chemische oder sonstige, visuell beobachtbare oder messbare Reaktion mit der Flüssigkeit (5) eingeht, und
- mindestens eine jeweilige Haltestruktur (6), die das jeweilige erste Teilvolumen (4a) umgrenzt und/oder umgibt,
wobei in den jeweiligen Kavitäten (4; 4'; 4") jeweils unterschiedliche oder unterschiedlich zusammengesetzte Flüssigkeiten (5; 5'; 5") mit jeweils unterschiedlicher Stärke der Oberflächenspannung, Benetzungsfähigkeit, Adhäsionskraft, Dichte und/oder Viskosität enthalten sind, die bei jeweils unterschiedlich hoher Stärke auftretender Stöße oder sonstiger Beschleunigungen die jeweilige Haltestruktur (6) oder die jeweilige Mehrzahl von Haltestrukturen (6) überwinden.

15. Stoßsensor nach einem der Ansprüche 1 bis 14,
**dadurch gekennzeichnet, dass** der Stoßsensor (10) als flächiges, verspendbares Etikett (30) zum Etikettieren eines Pakets, einer Verpackung, eines Medikamentenbehälters oder eines sonstigen Gegenstandes ausgebildet ist.

## Claims

1. An impact sensor (10) for identifying an impact or any other acceleration, the impact sensor (10) containing a liquid (5) in the form of a drop (15) or in the form of any other liquid supply (25), and being constructed such that the position and/or distribution of the liquid (5) in the impact sensor (10) indicates whether the impact sensor (10) has been subjected to an impact or any other acceleration of a predetermined minimum strength,
the impact sensor (10) having a layered composite (20) comprising at least the following:
- a first foil (1),
- a second foil (2),
- at least one cavity (4), recess or other kind of notch arranged between a foil surface of the first foil (1) and a foil surface of the second foil (2), and
- at least one holding structure (6) arranged on the foil surface of the first and/or second foil (1; 2),
- the at least one holding structure (6) being designed to hold the liquid (5) in a predetermined first partial volume (4a) of the cavity (4) in contact with both foils (1; 2) as long as the impact sensor (10) is sensitive to impacts or any other accelerations of predetermined minimum strength, and is further designed to allow the escape of the liquid (5) or of a part of the liquid (5), from the first partial volume (4a) into a second partial volume (4b) of the cavity (4) serving to collect the liquid (5), only in the event of an impact or any other acceleration above the predetermined minimum strength, such that
- the at least one holding structure (6) is a region of the first and/or second foil (1; 2) which is formed as a local elevation (6a), indentation (6b) or any other local non-flatness (8) of the foil surface,
wherein the local elevation (6a), indentation (6b) or any other non-flatness (8)
- forms a surmountable barrier for wetting and/or contacting the first and/or second foil (1; 2) by the liquid (5) and
- encloses a surface part of the foil surface of the first and/or second foil (1; 2) corresponding to the first partial volume (4a).

2. The impact sensor according to claim 1,
**characterized in that** the at least one holding structure (6) comprises a punched, embossed, incised, printed, glued or otherwise formed local non-flatness (8) or coating (9), which is arranged on a main surface of the first (1) and/or second foil (2) adjacent to the cavity (4).

3. The impact sensor according to claim 1 or 2,
**characterized in that** the elevation (6a), indentation (6b) or other kind of local non-flatness (8) extends the foil surface of the first and/or second foil (1; 2) as a circular, annular or other kind of close-loop line.

4. The impact sensor according to any of claims 1 to 3,
**characterized in that** the at least one holding element (6) comprises a first holding element of the first foil (1) and a second holding element of the second foil (2).

5. The impact sensor according to any of claims 1 to 4,
**characterized in that** the impact sensor (10), in at least one region of the second partial volume (4b) spaced from the first partial volume (4a) and/or from the at least one holding structure (6), comprises a material (12) which, upon contact with the liquid (5), allows to detect the escape of the liquid (5) from the first partial volume (4a) by absorbing, retaining or binding the liquid (5), by dissolving at least partially in the liquid and/or by undergoing a chemical reaction or any other visually observable or measurable reaction with the liquid (5).

6. The impact sensor according to any of claims 1 to 5,
**characterized in that** the impact sensor (10), in at least one region of the second partial volume (4b) being spaced from the first partial volume (4a) and/or from the at least one holding structure (6), comprises an electrode (27), an interdigital structure (28) made up of a plurality of electrodes and/or comprises any other electrode arrangement enabling measuring a change in the capacitance, in the electrical resistance or in any other electrical property upon contact with the liquid (5) or upon approaching of the liquid (5).

7. The impact sensor according to any of claims 1 to 6,
**characterized in that** the impact sensor (10), in a plurality of zones of the second partial volume (4b) which are spaced in different directions from the first partial volume (4a), comprises a material (12) which, upon contact with the liquid (5), absorbs, retains or binds the liquid (5), which dissolves at least partially in the liquid and/or which undergoes a chemical reaction or any other visually observable or measurable reaction with the liquid (5).

8. The impact sensor according to any of claims 5 to 7,
**characterized in that** the at least one holding structure (6) and/or the first partial volume (4a) predefined by the holding structure (9) is arranged in the middle or in the center of the lateral extension of the cavity (4) and **in that** the cavity (4) comprises a plurality of lateral bulges (16), pockets or any other widenings or extensions, which are arranged in respective different directions symmetrically around the at least one holding structure (6) and/or around the first partial volume (4a) in a distributed manner and in each of which separate pieces of material (13) or any other separate regions of the material (12) are arranged.

9. The impact sensor according to any of claims 5 to 8,
**characterized in that** the impact sensor (10), in the second partial volume (4b) of the cavity (4), comprises at least one guiding structure (17) on the adjacent main surface of the first (1) and/or second foil (2), which guiding structure (17) is spaced from the at least one holding structure (6), extends laterally as far as to a region of the second partial volume (4b) of the cavity (4) provided with the material (12), and, when the liquid (5) escapes from the first partial volume (4a) as a result of an impact, conducts the liquid (5) toward the material (12) and/or as far as to the material (12).

10. The impact sensor according to any of claims 5 to 9,
**characterized in that** the material (12) is a porous, foamy, swellable or otherwise absorbent filler material (12a) which permanently binds the liquid (5) upon contact with the liquid (5).

11. The impact sensor according to any of claims 5 to 9,
**characterized in that** the material (12) is an indicator material (12b) which, upon contact with the liquid (5), reacts chemically or in any other visually observable and/or measurable manner with the liquid (5) or with substances contained therein.

12. The impact sensor according to any of claims 1 to 11,
**characterized in that** the layered composite (20) of the impact sensor (10), on a side of the second foil (2) facing away from the first foil (1), further comprises at least the following:
- a third foil (3) and
- a further cavity (14), recess or other kind of notch arranged between the second foil (2) and the third foil (3) and serving to accommodate the liquid (5) before the impact sensor (10) is put into use,
the further cavity (14) being connected to the cavity (4) between the first (1) and the second foil (2) via a passage opening (18) in the second foil (2), and
the layered composite (20) being compressible and/or deformable in the region of the passage opening (18) in such a way that the liquid (5) is conveyed at least partially from the further cavity (14) into the first partial volume (4a) of the cavity (4) between the first (1) and the second foil (2) so as to make the impact sensor (10) sensitive to impacts or any other accelerations of predetermined minimum strength.

13. The impact sensor according to any of claims 5 to 12,
**characterized in that** the layered composite (20) of the impact sensor (10), between the first foil (1) and the second foil (2), comprises a plurality of separate cavities (4; 4'; 4"), recesses or other kind of notches which are separated from each other and each contain at least the following:
- a respective first partial volume (4a) filled or fillable with a respective amount of liquid (5; 5'; 5"),
- a respective second partial volume (4b) provided with a respective piece of material (13, 13', 13") or region of material (12) which, upon contact with the liquid (5), absorbs, retains or binds the liquid (5), dissolves at least partially in the liquid (5) and/or undergoes a chemical reaction or any other visually observable or measurable reaction with the liquid (5), and
- at least one respective holding structure (6) which delimits and/or surrounds the respective first partial volume (4a),
the holding structures (6) of the respective cavities (4; 4'; 4") being formed as differently sized, differently high, differently deep, differently wide and/or otherwise differently strong, but surmountable barriers against a locomotion of the liquid (5) parallel to the main surface of the first and/or second foil (1, 2).

14. The impact sensor according to any of claims 5 to 13,
**characterized in that** the layered composite (20) of the impact sensor (10), between the first foil (1) and the second foil (2), comprises a plurality of separate cavities (4; 4'; 4"), recesses or other kind of notches which are separated from each other and each contain at least the following:
- a respective first partial volume (4a) filled or fillable with a respective amount of liquid (5; 5'; 5"),
- a respective second partial volume (4b) provided with a respective piece of material (13, 13', 13") or region of material (12) which, upon contact with the liquid (5), absorbs, retains or binds the liquid (5), dissolves at least partially in the liquid (5) and/or undergoes a chemical reaction or any other visually observable or measurable reaction with the liquid (5), and
- at least one respective holding structure (6) which delimits and/or surrounds the respective first partial volume (4a),
the respective cavities (4; 4'; 4") containing respective different or differently composed liquids (5; 5'; 5") each having respectively different strengths of surface tension, wetting ability, adhesion force, density and/or viscosity, the liquids overcoming the respective holding structure (6) or the respective plurality of holding structures (6) at different levels of occurring impacts or other kinds of accelerations.

15. The impact sensor according to any of claims 1 to 14,
**characterized in that** the impact sensor (10) is formed as a flat, dispensable label (30) for labelling a package, packaging, drug container or any other article.

## Revendications

1. Capteur de choc (10) pour la détection d'un choc ou d'une autre accélération, sachant que le capteur de choc (10) contient un liquide (5) sous forme d'une gouttelette (15) ou d'une autre réserve de liquide (25) et est constitué de telle manière que la position et/ou répartition du liquide (5) dans le capteur de choc (10) indique si le capteur de choc (10) a été exposé à un choc ou une autre accélération d'une intensité minimale prédéterminée,
sachant que le capteur de choc (10) présente un assemblage de couches (20) qui comprend au moins ce qui suit :
- une première feuille (1),
- une deuxième feuille (2),
- au moins une cavité (4), un autre renfoncement ou un autre évidement disposé entre une face de feuille de la première feuille (1) et une face de feuille de la deuxième feuille (2) et
- au moins une structure de retenue (6) disposée sur la face de feuille de la première et/ou deuxième feuille (1 ; 2),
- sachant que l'au moins une structure de retenue (6) est conçue pour maintenir le liquide (5) en contact avec les deux feuilles (1 ; 2) dans un premier volume partiel (4a) prédéterminé de la cavité (4) tant que le capteur de choc (10) est sensible aux chocs ou autres accélérations d'intensité prédéterminée, et est en outre conçue pour ne permettre une sortie du liquide (5) ou d'une partie du liquide (5) du premier volume partiel (4a) vers un deuxième volume partiel (4b) de la cavité (4), lequel sert à recueillir le liquide (5), que dans le cas d'un choc ou d'une autre accélération au-dessus de l'intensité prédéterminée de telle manière que
- l'au moins une structure de retenue (6) soit une zone de la première et/ou deuxième feuille (1 ; 2) qui est constituée comme protubérance (6a) locale, renfoncement (6b) ou autre inégalité (8) locale de la face de feuille, sachant que la protubérance (6a), le renfoncement (6b) ou autre inégalité (8) locale
- forme une barrière franchissable pour l'humidification et/ou le contact de la première et/ou deuxième feuille (1 ; 2) par le liquide (5) et
- délimite une partie surfacique de la face de feuille de la première et/ou deuxième feuille (1 ; 2), laquelle correspond au premier volume partiel (4a).

2. Capteur de choc selon la revendication 1,
**caractérisé en ce que** l'au moins une structure de retenue (6) comprend une inégalité (8) ou un revêtement (9) local formé par découpe, poinçonnage, entaille, impression, collage ou de toute autre manière, disposé sur une face principale adjacente à la cavité (4) de la première (1) et/ou deuxième feuille (2).

3. Capteur de choc selon la revendication 1 ou 2,
**caractérisé en ce que** la protubérance (6a), le renfoncement (6b) ou autre inégalité (8) locale passe sur la face de feuille de la première et/ou deuxième feuille (1 ; 2) comme ligne circulaire, annulaire ou autre ligne fermée sur elle-même.

4. Capteur de choc selon l'une des revendications 1 à 3,
**caractérisé en ce que** l'au moins un élément de retenue (6) comprend un premier élément de retenue de la première feuille (1) et un deuxième élément de retenue de la deuxième feuille (2).

5. Capteur de choc selon l'une des revendications 1 à 4,
**caractérisé en ce que** le capteur de choc (10), dans au moins une zone du deuxième volume partiel (4b) qui est espacée du premier volume partiel (4a) et/ou de l'au moins une structure de retenue (6), présente un matériau (12) qui permet une détection de la sortie du liquide (5) du premier volume partiel (4a) **en ce que**, en cas de contact avec le liquide (5), il aspire, retient ou lie le liquide (5), se dissout au moins en partie dans le liquide et/ou entre en réaction chimique ou autre, visuellement observable et mesurable, avec le liquide (5).

6. Capteur de choc selon l'une des revendications 1 à 5,
**caractérisé en ce que** le capteur de choc (10), dans au moins une zone du deuxième volume partiel (4b) qui est espacée du premier volume partiel (4a) et/ou de l'au moins une structure de retenue (6), présente une électrode (27), une structure interdigitale (28) composée de plusieurs électrodes et/ou un autre agencement d'électrodes par lequel, en cas de contact avec le liquide (5) ou de rapprochement de liquide (5), un changement de la capacité, de la résistance électrique ou d'une autre propriété électrique est mesurable.

7. Capteur de choc selon l'une des revendications 1 à 6,
**caractérisé en ce que** le capteur de choc (10), dans une pluralité de zones du deuxième volume partiel (4b) qui sont espacées du premier volume partiel (4a) dans différentes directions, présente un matériau (12) qui, en cas de contact avec le liquide (5), aspire, retient ou lie le liquide (5), se dissout au moins en partie dans le liquide et/ou entre en réaction chimique ou autre, visuellement observable et mesurable, avec le liquide (5).

8. Capteur de choc selon l'une des revendications 5 à 7,
**caractérisé en ce que** l'au moins une structure de retenue (6) et/ou le premier volume partiel (4a) prédéfini par la structure de retenue (9) est disposé au milieu ou au centre de l'extension latérale de la cavité (4) et **en ce que** la cavité (4) présente une pluralité de renflements (16), poches ou autres élargissements ou ramifications latéraux qui sont disposés de manière répartie symétriquement autour de l'au moins une structure de retenue (6) et/ou autour du premier volume partiel (4a) dans des directions respectivement différentes et dans lesquels des parties de matériau (13) séparées respectivement les unes des autres ou d'autres zones du matériau (12) distinctes sont disposées.

9. Capteur de choc selon l'une des revendications 5 à 8,
**caractérisé en ce que** le capteur de choc (10), dans le deuxième volume partiel (4b) de la cavité (4) sur la face principale adjacente de la première (1) et/ou deuxième feuille (2), présente au moins une structure de guidage (17) qui est espacée de l'au moins une structure de retenue (6), s'étend latéralement jusqu'à une zone du deuxième volume partiel (4b) de la cavité (4) qui est pourvue du matériau (12) et, en cas de sortie du liquide (5) du premier volume partiel (4a) suite à un choc, conduit le liquide (5) en direction du matériau (12) et/ou jusqu'au matériau (12).

10. Capteur de choc selon l'une des revendications 5 à 9,
**caractérisé en ce que** le matériau (12) est un matériau de remplissage (12a) poreux, en forme de mousse, gonflable ou absorbant d'une autre manière, qui, en cas de contact avec le liquide (5), lie durablement le liquide (5).

11. Capteur de choc selon l'une des revendications 5 à 9,
**caractérisé en ce que** le matériau (12) est un matériau indicateur (12b) qui, en cas de contact avec le liquide (5), réagit chimiquement ou d'une autre manière visuellement observable et/ou mesurable avec le liquide (5) ou des substances contenues dans celui-ci.

12. Capteur de choc selon l'une des revendications 1 à 11,
**caractérisé en ce que** l'assemblage de couches (20) du capteur de choc (10), d'un côté de la deuxième feuille (2) qui est opposée à la première feuille (1), présente au moins ce qui suit :
- une troisième feuille (3) et
- une cavité (14), renfoncement ou autre évidement supplémentaire disposé entre la deuxième feuille (2) et la troisième feuille (3), qui sert à loger le liquide (5) avant la mise en service du capteur de choc (10),
sachant que la cavité (14) supplémentaire est reliée à la cavité (4) entre la première (1) et la deuxième feuille (2) par une ouverture de passage (18) dans la deuxième feuille (2) et
sachant que l'assemblage de couches (20) est compressible et/ou déformable au niveau de l'ouverture de passage (18) de telle manière que le liquide (5) soit refoulé au moins en partie de la cavité (14) supplémentaire vers le premier volume partiel (4a) de la cavité (4) entre la première (1) et la deuxième feuille (2) pour rendre le capteur de choc (10) sensible aux chocs ou autres accélérations d'intensité prédéterminée.

13. Capteur de choc selon l'une des revendications 5 à 12,
**caractérisé en ce que** l'assemblage de couches (20) du capteur de choc (10) présente, entre la première feuille (1) et la deuxième feuille (2), une pluralité de cavités (4 ; 4' ; 4"), renfoncements ou autres évidements distincts qui sont séparés les uns des autres et contiennent respectivement au moins ce qui suit :
- un premier volume partiel (4a) respectif qui est rempli ou peut être rempli d'une quantité respective de liquide (5 ; 5' ; 5"),
- un deuxième volume partiel (4b) respectif qui est pourvu d'une partie de matériau (13, 13', 13") ou zone d'un matériau (12) respective, laquelle, en cas de contact avec le liquide (5), aspire, retient ou lie le liquide (5), se dissout au moins en partie dans le liquide et/ou entre en réaction chimique ou autre, visuellement observable et mesurable, avec le liquide (5), et
- au moins une structure de retenue (6) qui délimite et/ou entoure le premier volume partiel (4a) respectif, sachant que les structures de retenue (6) des cavités (4 ; 4' ; 4") respectives sont constituées comme barrières différentes en grandeur, hauteur, profondeur, largeur et/ou d'une autre manière, mais franchissables, contre une continuation du liquide (5) parallèlement à la face principale de la première et/ou deuxième feuille (1, 2).

14. Capteur de choc selon l'une des revendications 5 à 13,
**caractérisé en ce que** l'assemblage de couches (20) du capteur de choc (10) présente, entre la première feuille (1) et la deuxième feuille (2), une pluralité de cavités (4 ; 4' ; 4"), renfoncements ou autres évidements distincts qui sont séparés les uns des autres et contiennent respectivement au moins ce qui suit :
- un premier volume partiel (4a) respectif qui est rempli ou peut être rempli d'une quantité respective de liquide (5 ; 5' ; 5"),
- un deuxième volume partiel (4b) respectif qui est pourvu d'une partie de matériau (13, 13', 13") ou zone d'un matériau (12) respective, laquelle, en cas de contact avec le liquide (5), aspire, retient ou lie le liquide (5), se dissout au moins en partie dans le liquide et/ou entre en réaction chimique ou autre, visuellement observable et mesurable, avec le liquide (5), et
- au moins une structure de retenue (6) respective qui délimite et/ou entoure le premier volume partiel (4a) respectif,
sachant que dans les cavités (4 ; 4' ; 4") respectives, des liquides (5 ; 5' ; 5") respectivement différents ou de composition différente et présentant un degré respectivement différent de tension de surface, de capacité d'humidification, de force adhésive, de densité et/ou de viscosité sont contenus, qui, en cas d'intensité respectivement différente de chocs ou autres accélérations qui surviennent, franchissent la structure de retenue (6) respective ou la pluralité respective de structures de retenue (6).

15. Capteur de choc selon l'une des revendications 1 à 14,
**caractérisé en ce que** le capteur de choc (10) est constitué comme étiquette (30) surfacique distribuable pour l'étiquetage d'un colis, d'un emballage, d'un contenant de médicament ou d'un autre objet.
